(19) Europäisches Patentamt / European Patent Office / Office européen des brevets

(11) **EP 4 346 262 A1**

(12) **EUROPEAN PATENT APPLICATION**

(43) Date of publication:
**03.04.2024 Bulletin 2024/14**

(21) Application number: **22198027.9**

(22) Date of filing: **27.09.2022**

(51) International Patent Classification (IPC):
**H04W 24/02** *(2009.01)* **H04W 72/04** *(2023.01)*

(52) Cooperative Patent Classification (CPC):
**H04W 24/02; G06N 20/00;** G06N 3/006;
G06N 3/0442; G06N 3/0464; G06N 3/09;
G06N 5/01; G06N 7/01

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **INTEL Corporation**
**Santa Clara, CA 95054 (US)**

(72) Inventors:
• **SINGH, Vaibhav**
**110014 New Delhi (IN)**
• **MACIOCCO, Christian**
**Portland, 97229 (US)**

(74) Representative: **Viering, Jentschura & Partner mbB**
**Patent- und Rechtsanwälte**
**Am Brauhaus 8**
**01099 Dresden (DE)**

(54) **METHODS AND DEVICES TO DETECT AN IMBALANCE ASSOCIATED WITH AN ARTIFICIAL INTELLIGENCE/MACHINE LEARNING MODEL**

(57) A device may include a processor configured to detect an imbalance associated with a trained machine learning model configured to provide an output to manage radio resources within a cell of a mobile communication network, wherein the trained machine learning model is trained based on training parameters representative of an objective function, determine, based on conditions of the cell, one or more parameters to be used to adjust the objective function, and cause an adjustment to the training parameters based on the determined one or more parameters.

FIG. 5

## Description

### Technical Field

This disclosure generally relates to methods and devices to detect an imbalance associated with an artificial intelligence/machine learning model (AI/ML).

### Background

In mobile radio communication networks in accordance with many mobile radio communication technologies, such as Fourth Generation (LTE) and Fifth Generation (5G) New Radio (NR), there are various techniques that are applied to manage radio resources. Such techniques may include controlling parameters associated with scheduling transmission of radio communication signals, transmit power, allocation of mobile communication devices within radio resources, beamforming, data rates for communications, handover functions, modulation and coding schemes, etc.

AI/MLs may be employed within the mobile communication network in order to participate in the management of radio resources. AI/MLs may rely on obtaining a model that can learn from data and provide the desired output by building mathematical models that can map input data to output data. In order to obtain an artificial intelligence/machine learning model (AI/ML) that maps input data to an output that is desired in order to solve a problem, various learning methods may be employed to train the AI/ML, so that the AI/ML can learn to map the input data to outputs with the desired accuracy.

### Brief Description of the Drawings

In the drawings, like reference characters generally refer to the same parts throughout the different views. The drawings are not necessarily to scale, emphasis instead generally being placed upon illustrating the principles of the disclosure. In the following description, various aspects of the disclosure are described with reference to the following drawings, in which:

FIG. 1 shows an exemplary radio communication network;
FIG. 2 shows an exemplary internal configuration of a communication device;
FIG. 3 shows an exemplary illustration of two cells of a mobile communication network;
FIG. 4 shows an exemplary graph representing the average high load state of cells within a predefined period of time;
FIG. 5 shows an example of a device;
FIG. 6 shows an exemplary illustration of supervised training with an AI/ML unit;
FIG. 7 shows an example of a procedure to determine new prediction weight parameters for an objective function;
FIG. 8 shows an exemplary procedure of a training unit to adjust the model parameters of an AI/ML;
FIG. 9 shows an exemplary illustration of an AI/ML trained to output a management parameter used to manage radio resources of a radio access network;
FIG. 10 shows an exemplary illustration of two devices;
FIG. 11 shows an exemplary illustration of various entities of a mobile communication network;
FIG. 12 shows a flow diagram associated with detection of an imbalance;
FIG. 13 shows an exemplary radio access network architecture in which the radio access network is disaggregated into multiple units;
FIG. 14 shows an example of a method.

### Description

The following detailed description refers to the accompanying drawings that show, by way of illustration, exemplary details and aspects in which aspects of the present disclosure may be practiced.

The word "exemplary" is used herein to mean "serving as an example, instance, or illustration". Any embodiment or design described herein as "exemplary" is not necessarily to be construed as preferred or advantageous over other embodiments or designs.

The words "plurality" and "multiple" in the description or the claims expressly refer to a quantity greater than one. The terms "group (of)", "set [of]", "collection (of)", "series (of)", "sequence (of)", "grouping (of)", etc., and the like in the description or in the claims refer to a quantity equal to or greater than one, i.e. one or more. Any term expressed in a plural form that does not expressly state "plurality" or "multiple" likewise refers to a quantity equal to or greater than one.

Any vector and/or matrix notation utilized herein is exemplary in nature and is employed solely for purposes of explanation. Accordingly, the apparatuses and methods of this disclosure accompanied by vector and/or matrix notation are not limited to being implemented solely using vectors and/or matrices, and the associated processes and computations may be equivalently performed with respect to sets, sequences, groups, etc., of data, observations, information, signals, samples, symbols, elements, etc.

As used herein, "memory" is understood as a non-transitory computer-readable medium in which data or information can be stored for retrieval. References to "memory" included herein may thus be understood as referring to volatile or non-volatile memory, including random access memory ("RAM"), read-only memory ("ROM"), flash memory, solid-state storage, magnetic tape, hard disk drive, optical drive, etc., or any combination thereof. Furthermore, registers, shift registers, processor registers, data buffers, etc., are also embraced herein by the term memory. A single component referred to as "memory" or "a memory" may be composed of more than one different type of memory, and thus may refer to a collective component including one or more types of memory. Any single memory component may be separated into multiple collectively equivalent memory components, and vice versa. Furthermore, while memory may be depicted as separate from one or more other components (such as in the drawings), memory may also be integrated with other components, such as on a common integrated chip or a controller with an embedded memory.

The term "software" refers to any type of executable instruction, including firmware.

In the context of this disclosure, the term "process" may be used, for example, to indicate a method. Illustratively, any process described herein may be implemented as a method (e.g., a channel estimation process may be understood as a channel estimation method). Any process described herein may be implemented as a non-transitory computer readable medium including instructions configured, when executed, to cause one or more processors to carry out the process (e.g., to carry out the method).

The apparatuses and methods of this disclosure may utilize or be related to radio communication technologies. While some examples may refer to specific radio communication technologies, the examples provided herein may be similarly applied to various other radio communication technologies, both existing and not yet formulated, particularly in cases where such radio communication technologies share similar features as disclosed regarding the following examples. Various exemplary radio communication technologies that the apparatuses and methods described herein may utilize include, but are not limited to: a Global System for Mobile Communications ("GSM") radio communication technology, a General Packet Radio Service ("GPRS") radio communication technology, an Enhanced Data Rates for GSM Evolution ("EDGE") radio communication technology, and/or a Third Generation Partnership Project ("3GPP") radio communication technology, for example Universal Mobile Telecommunications System ("UMTS"), Freedom of Multimedia Access ("FOMA"), 3GPP Long Term Evolution ("LTE"), 3GPP Long Term Evolution Advanced ("LTE Advanced"), Code division multiple access 2000 ("CDMA2000"), Cellular Digital Packet Data ("CDPD"), Mobitex, Third Generation (3G), Circuit Switched Data ("CSD"), High-Speed Circuit-Switched Data ("HSCSD"), Universal Mobile Telecommunications System ("Third Generation") ("UMTS (3G)"), Wideband Code Division Multiple Access (Universal Mobile Telecommunications System) ("W-CDMA (UMTS)"), High Speed Packet Access ("HSPA"), High-Speed Downlink Packet Access ("HSDPA"), High-Speed Uplink Packet Access ("HSUPA"), High Speed Packet Access Plus ("HSPA+"), Universal Mobile Telecommunications System-Time-Division Duplex ("UMTS-TDD"), Time Division-Code Division Multiple Access ("TD-CDMA"), Time Division-Synchronous Code Division Multiple Access ("TD-CDMA"), 3rd Generation Partnership Project Release 8 (Pre-4th Generation) ("3GPP Rel. 8 (Pre-4G)"), 3GPP Rel. 9 (3rd Generation Partnership Project Release 9), 3GPP Rel. 10 (3rd Generation Partnership Project Release 10) , 3GPP Rel. 11 (3rd Generation Partnership Project Release 11), 3GPP Rel. 12 (3rd Generation Partnership Project Release 12), 3GPP Rel. 13 (3rd Generation Partnership Project Release 13), 3GPP Rel. 14 (3rd Generation Partnership Project Release 14), 3GPP Rel. 15 (3rd Generation Partnership Project Release 15), 3GPP Rel. 16 (3rd Generation Partnership Project Release 16), 3GPP Rel. 17 (3rd Generation Partnership Project Release 17), 3GPP Rel. 18 (3rd Generation Partnership Project Release 18), 3GPP 5G, 3GPP LTE Extra, LTE-Advanced Pro, LTE Licensed-Assisted Access ("LAA"), MuLTEfire, UMTS Terrestrial Radio Access ("UTRA"), Evolved UMTS Terrestrial Radio Access ("E-UTRA"), Long Term Evolution Advanced (4th Generation) ("LTE Advanced (4G)"), cdmaOne ("2G"), Code division multiple access 2000 (Third generation) ("CDMA2000 (3G)"), Evolution-Data Optimized or Evolution-Data Only ("EV-DO"), Advanced Mobile Phone System (1st Generation) ("AMPS (1G)"), Total Access Communication arrangement/Extended Total Access Communication arrangement ("TACS/ETACS"), Digital AMPS (2nd Generation) ("D-AMPS (2G)"), Push-to-talk ("PTT"), Mobile Telephone System ("MTS"), Improved Mobile Telephone System ("IMTS"), Advanced Mobile Telephone System ("AMTS"), OLT (Norwegian for Offentlig Landmobil Telefoni, Public Land Mobile Telephony), MTD (Swedish abbreviation for Mobiltelefonisystem D, or Mobile telephony system D), Public Automated Land Mobile ("Autotel/PALM"), ARP (Finnish for Autoradiopuhelin, "car radio phone"), NMT (Nordic Mobile Telephony), High capacity version of NTT (Nippon Telegraph and Telephone) ("Hicap"), Cellular Digital Packet Data ("CDPD"), Mobitex, DataTAC, Integrated Digital Enhanced Network ("iDEN"), Personal Digital Cellular ("PDC"), Circuit Switched Data ("CSD"), Personal Handy-phone System ("PHS"), Wideband Integrated Digital Enhanced Network ("WiDEN"), iBurst, Unlicensed Mobile Access ("UMA"), also referred to as also referred to as 3GPP Generic Access Network, or GAN standard), Zigbee, Bluetooth®, Wireless Gigabit Alliance ("WiGig") standard, mmWave standards in general (wireless systems operating at 10-300 GHz and above such as WiGig, IEEE 802.11ad, IEEE 802.11ay, etc.), technologies operating above 300 GHz and THz bands, (3GPP/LTE based or IEEE 802.11p and other) Vehicle-to-Vehicle ("V2V") and Vehicle-to-X ("V2X") and Vehicle-to-Infrastructure ("V2I") and Infrastructure-to-Vehicle ("I2V") communication technologies, 3GPP cellular V2X, DSRC (Dedicated Short Range Communications) communication arrangements such as Intelligent-Transport-Systems, and other existing, developing, or future radio communication technologies.

The apparatuses and methods described herein may use such radio communication technologies according to various spectrum management schemes, including, but not limited to, dedicated licensed spectrum, unlicensed spectrum, (licensed) shared spectrum (such as LSA = Licensed Shared Access in 2.3-2.4 GHz, 3.4-3.6 GHz, 3.6-3.8 GHz and further frequencies and SAS = Spectrum Access System in 3.55-3.7 GHz and further frequencies), and may use various spectrum bands including, but not limited to, IMT (International Mobile Telecommunications) spectrum (including 450-470 MHz, 790-960 MHz, 1710-2025 MHz, 2110-2200 MHz, 2300-2400 MHz, 2500-2690 MHz, 698-790 MHz, 610-790 MHz, 3400-3600 MHz, etc., where some bands may be limited to specific region(s) and/or countries), IMT-advanced spectrum, IMT-2020 spectrum (expected to include 3600-3800 MHz, 3.5 GHz bands, 700 MHz bands, bands within the 24.25-86 GHz range, etc.), spectrum made available under FCC's "Spectrum Frontier" 5G initiative (including 27.5-28.35 GHz, 29.1-29.25 GHz, 31-31.3 GHz, 37-38.6 GHz, 38.6-40 GHz, 42-42.5 GHz, 57-64 GHz, 64-71 GHz, 71-76 GHz, 81-86 GHz and 92-94 GHz, etc.), the ITS (Intelligent Transport Systems) band of 5.9 GHz (typically 5.85-5.925 GHz) and 63-64 GHz, bands currently allocated to WiGig such as WiGig Band 1 (57.24-59.40 GHz), WiGig Band 2 (59.40-61.56 GHz) and WiGig Band 3 (61.56-63.72 GHz) and WiGig Band 4 (63.72-65.88 GHz), the 70.2 GHz-71 GHz band, any band between 65.88 GHz and 71 GHz, bands currently allocated to automotive radar applications such as 76-81 GHz, and future bands including 94-300 GHz and above. Furthermore, the apparatuses and methods described herein can also employ radio communication technologies on a secondary basis on bands such as the TV White Space bands (typically below 790 MHz) where e.g. the 400 MHz and 700 MHz bands are prospective candidates. Besides cellular applications, specific applications for vertical markets may be addressed such as PMSE (Program Making and Special Events), medical, health, surgery, automotive, low-latency, drones, etc. applications. Furthermore, the apparatuses and methods described herein may also use radio communication technologies with a hierarchical application, such as by introducing a hierarchical prioritization of usage for different types of users (e.g., low/medium/high priority, etc.), based on a prioritized access to the spectrum e.g., with highest priority to tier-1 users, followed by tier-2, then tier-3, etc. users, etc. The apparatuses and methods described herein can also use radio communication technologies with different Single Carrier or OFDM flavors (CP-OFDM, SC-FDMA, SC-OFDM, filter bank-based multicarrier (FBMC), OFDMA, etc.) and e.g. 3GPP NR (New Radio), which can include allocating the OFDM carrier data bit vectors to the corresponding symbol resources.

For purposes of this disclosure, radio communication technologies may be classified as one of a Short Range radio communication technology or Cellular Wide Area radio communication technology. Short Range radio communication technologies may include Bluetooth, WLAN (e.g., according to any IEEE 802.11 standard), and other similar radio communication technologies. Cellular Wide Area radio communication technologies may include Global System for Mobile Communications ("GSM"), Code Division Multiple Access 2000 ("CDMA2000"), Universal Mobile Telecommunications System ("UMTS"), Long Term Evolution ("LTE"), General Packet Radio Service ("GPRS"), Evolution-Data Optimized ("EV-DO"), Enhanced Data Rates for GSM Evolution ("EDGE"), High Speed Packet Access (HSPA; including High Speed Downlink Packet Access ("HSDPA"), High Speed Uplink Packet Access ("HSUPA"), HSDPA Plus ("HSDPA+"), and HSUPA Plus ("HSUPA+")), Worldwide Interoperability for Microwave Access ("WiMax") (e.g., according to an IEEE 802.16 radio communication standard, e.g., WiMax fixed or WiMax mobile), etc., and other similar radio communication technologies. Cellular Wide Area radio communication technologies also include "small cells" of such technologies, such as microcells, femtocells, and picocells. Cellular Wide Area radio communication technologies may be generally referred to herein as "cellular" communication technologies.

Unless explicitly specified, the term "transmit" encompasses both direct (point-to-point) and indirect transmission (via one or more intermediary points). Similarly, the term "receive" encompasses both direct and indirect reception. Furthermore, the terms "transmit", "receive", "communicate", and other similar terms encompass both physical transmission (e.g., the transmission of radio signals) and logical transmission (e.g., the transmission of digital data over a logical software-level connection). For example, a processor or controller may transmit or receive data over a software-level connection with another processor or controller in the form of radio signals, where the physical transmission and reception are handled by radio-layer components such as RF transceivers and antennas, and the logical transmission and reception over the software-level connection is performed by the processors or controllers. The term "communicate" encompasses one or both transmitting and receiving, i.e. unidirectional or bidirectional communication in one or both of the incoming and outgoing directions. The term "calculate" encompasses both 'direct' calculations via a mathematical expression/formula/relationship and 'indirect' calculations via lookup or hash tables and other array indexing or searching operations.

In order to train an AI/ML, training data set may include data pairs, one representative of training input data, which may resemble input data to be provided to the AI/ML after deployment (i.e. after the AI/ML is trained), and training output data, which may be a desired output for the respective training input data (e.g. a label, a target). In supervised learning, the AI/ML may obtain an output according to current model parameters, compare the obtained output with the training output data, and adjust model parameters of the AI/ML (i.e. AI/ML parameters) accordingly with an intention to provide a more accurate output at a next inference. An AI/ML may further carry on such a learning process after it is trained using training data, by comparing obtained outputs with further control data (e.g. via measurements, readings, etc. associated with the actions performed by obtained outputs) and adjusting AI/ML parameters in use. It is to be noted that the term "training" encompasses all stages associated with learning of the AI/ML in this disclosure, such as training, validation, using test sets, and training/optimizations after deployment of the AI/ML.

Therefore, the performance of an AI/ML may rely on the nature of the data set used to train the AI/ML, in particular, whether the data set used to train the AI/ML fits the nature of input data the AI/ML receives after the deployment. It is common for deployed AI/MLs, such that a training unit may train an AI/ML in predefined conditions with a first training data set, which the training unit may train the AI/ML via batch learning (i.e. offline learning) using a large training data set arranged according to predefined conditions. The AI/ML may then be deployed into its working environment, and the training unit may further train the AI/ML with a second training data that is intended to reflect the nature of input data that the AI/ML would receive within the working environment in a closer manner. In any event, after its deployment, if the characteristics (e.g. nature of attributes, features, etc.) of the training data set used to train an AI/ML do not reflect the characteristics that the AI/ML obtains from received input data after its deployment, such an imbalance (e.g. data imbalance) may diminish the accuracy of the AI/ML.

Such an imbalance may arise due to data imbalance, which may be defined as the training data set (i.e. data set used to train an AI/ML) including a characteristic or a class causing the AI/ML to be biased or skewed. For example, assuming a case in which the training data set used to train an AI/ML includes training data set, each training input data including an attribute (i.e. a feature) that is representative of conditions of a cell having a high cell load (i.e. cell load is above a predefined cell load). If this AI/ML was deployed in an environment in which the cells operate at a low cell load (i.e. cell load is below the predefined cell load), the outputs of this AI/ML would be biased or skewed, as the AI/ML was trained using training input data representing high cell load characteristics. In a classification scenario, the AI/ML may perform imbalanced classifications, as the distribution of samples provided by the training data set to the AI/ML to the classifiers is biased or skewed towards high cell load scenarios, resulting in imbalanced classifications. The term used "imbalance" in this disclosure encompasses both the data imbalance and the classification imbalance unless explicitly disclosed.

It may be considered that a constantly learning AI/ML (i.e. AI/ML is further trained during the deployment) would eventually overcome the imbalance, but that would be at cost of a considerable amount of errors and it would take time. Furthermore, the conditions may change in time, or preferences associated with the output of the AI/ML may vary. It may be desirable to overcome the imbalance issue, and it may also be desirable to fit the trained AI/ML into preferred conditions in a quicker manner.

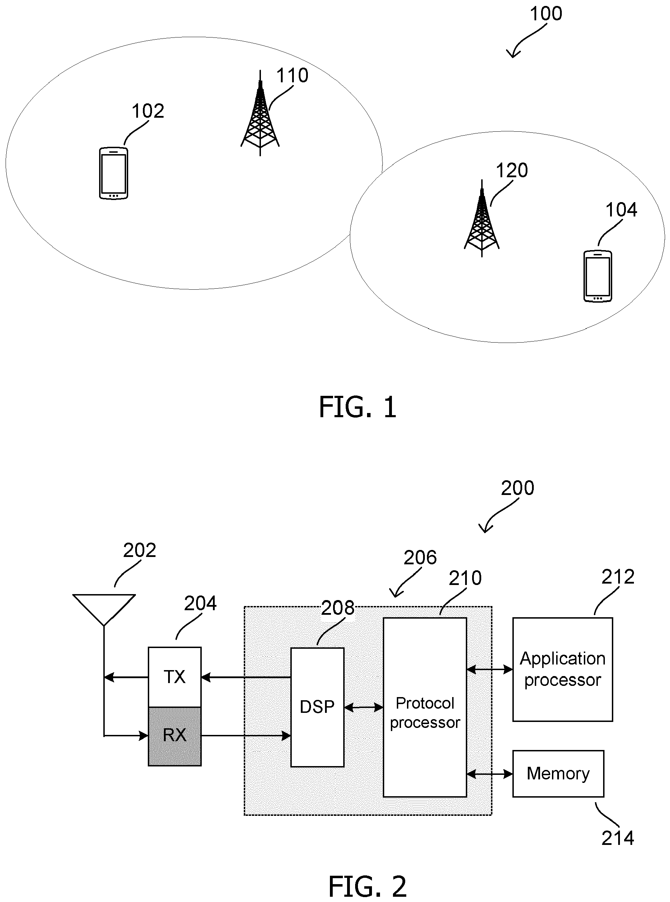

FIGs. 1 and 2 depict a general network and device architecture for wireless communications. In particular, FIG. 1 shows exemplary radio communication network 100 according to some aspects, which may include terminal devices 102 and 104 and network access nodes 110 and 120. Radio communication network 100 may communicate with terminal devices 102 and 104 via network access nodes 110 and 120 over a radio access network. Although certain examples described herein may refer to a particular radio access network context (e.g., LTE, UMTS, GSM, other 3rd Generation Partnership Project (3GPP) networks, WLAN/WiFi, Bluetooth, 5G NR, mmWave, etc.), these examples are demonstrative and may therefore be readily applied to any other type or configuration of radio access network. The number of network access nodes and terminal devices in radio communication network 100 is exemplary and is scalable to any amount.

In an exemplary cellular context, network access nodes 110 and 120 may be base stations (e.g., eNodeBs, NodeBs, Base Transceiver Stations (BTSs), gNodeBs, or any other type of base station), while terminal devices 102 and 104 may be cellular terminal devices (e.g., Mobile Stations (MSs), User Equipments (UEs), or any type of cellular terminal device). Network access nodes 110 and 120 may therefore interface (e.g., via backhaul interfaces) with a cellular core network such as an Evolved Packet Core (EPC, for LTE), Core Network (CN, for UMTS), or other cellular core networks, which may also be considered part of radio communication network 100. The cellular core network may interface with one or more external data networks. In an exemplary short-range context, network access node 110 and 120 may be access points (APs, e.g., WLAN or WiFi APs), while terminal device 102 and 104 may be short range terminal devices (e.g., stations (STAs)). Network access nodes 110 and 120 may interface (e.g., via an internal or external router) with one or more external data networks. Network access nodes 110 and 120 and terminal devices 102 and 104 may include one or multiple transmission/reception points (TRPs).

Network access nodes 110 and 120 (and, optionally, other network access nodes of radio communication network 100 not explicitly shown in FIG. 1) may accordingly provide a radio access network to terminal devices 102 and 104 (and, optionally, other terminal devices of radio communication network 100 not explicitly shown in FIG. 1). In an exemplary cellular context, the radio access network provided by network access nodes 110 and 120 may enable terminal devices 102 and 104 to wirelessly access the core network via radio communications. The core network may provide switching, routing, and transmission, for traffic data related to terminal devices 102 and 104, and may further provide access to various internal data networks (e.g., control nodes, routing nodes that transfer information between other terminal devices on radio communication network 100, etc.) and external data networks (e.g., data networks providing voice, text, multimedia (audio, video, image), and other Internet and application data). In an exemplary short-range context, the radio access network provided by network access nodes 110 and 120 may provide access to internal data networks (e.g., for transferring data between terminal devices connected to radio communication network 100) and external data networks (e.g., data networks providing voice, text, multimedia (audio, video, image), and other Internet and application data).

The radio access network and core network (if applicable, such as for a cellular context) of radio communication network 100 may be governed by communication protocols that can vary depending on the specifics of radio communication network 100. Such communication protocols may define the scheduling, formatting, and routing of both user and control data traffic through radio communication network 100, which includes the transmission and reception of such data through both the radio access and core network domains of radio communication network 100. Accordingly, terminal devices 102 and 104 and network access nodes 110 and 120 may follow the defined communication protocols to transmit and receive data over the radio access network domain of radio communication network 100, while the core network may follow the defined communication protocols to route data within and outside of the core network. Exemplary communication protocols include LTE, UMTS, GSM, WiMAX, Bluetooth, WiFi, mmWave, etc., any of which may be applicable to radio communication network 100.

FIG. 2 shows an exemplary internal configuration of a communication device according to various aspects provided in this disclosure. The communication device may include various aspects of network access nodes 110, 120 or various aspects of a terminal device 102 as well. The communication device 200 may include antenna system 202, radio frequency (RF) transceiver 204, baseband modem 206 (including digital signal processor 208 and protocol controller 210), application processor 212, and memory 214. Although not explicitly shown in FIG. 2, in some aspects communication device 200 may include one or more additional hardware and/or software components, such as processors/microprocessors, controllers/microcontrollers, other specialty or generic hardware/processors/circuits, peripheral device(s), memory, power supply, external device interface(s), subscriber identity module(s) (SIMs), user input/output devices (display(s), keypad(s), touchscreen(s), speaker(s), external button(s), camera(s), microphone(s), etc.), or other related components.

Communication device 200 may transmit and receive radio signals on one or more radio access networks. Baseband modem 206 may direct such communication functionality of communication device 200 according to the communication protocols associated with each radio access network, and may execute control over antenna system 202 and RF transceiver 204 to transmit and receive radio signals according to the formatting and scheduling parameters defined by each communication protocol. Although various practical designs may include separate communication components for each supported radio communication technology (e.g., a separate antenna, RF transceiver, digital signal processor, and controller), for purposes of conciseness the configuration of communication device 200 shown in FIG. 2 depicts only a single instance of such components.

Communication device 200 may transmit and receive wireless signals with antenna system 202. Antenna system 202 may be a single antenna or may include one or more antenna arrays that each include multiple antenna elements. For example, antenna system 202 may include an antenna array at the top of communication device 200 and a second antenna array at the bottom of communication device 200. In some aspects, antenna system 202 may additionally include analog antenna combination and/or beamforming circuitry. In the receive (RX) path, RF transceiver 204 may receive analog radio frequency signals from antenna system 202 and perform analog and digital RF front-end processing on the analog radio frequency signals to produce digital baseband samples (e.g., In-Phase/Quadrature (IQ) samples) to provide to baseband modem 206. RF transceiver 204 may include analog and digital reception components including amplifiers (e.g., Low Noise Amplifiers (LNAs)), filters, RF demodulators (e.g., RF IQ demodulators)), and analog-to-digital converters (ADCs), which RF transceiver 204 may utilize to convert the received radio frequency signals to digital baseband samples. In the transmit (TX) path, RF transceiver 204 may receive digital baseband samples from baseband modem 206 and perform analog and digital RF front-end processing on the digital baseband samples to produce analog radio frequency signals to provide to antenna system 202 for wireless transmission. RF transceiver 204 may thus include analog and digital transmission components including amplifiers (e.g., Power Amplifiers (PAs)), filters, RF modulators (e.g., RF IQ modulators), and digital-to-analog converters (DACs), which RF transceiver 204 may utilize to mix the digital baseband samples received from baseband modem 206 and produce the analog radio frequency signals for wireless transmission by antenna system 202. In some aspects baseband modem 206 may control the radio transmission and reception of RF transceiver 204, including specifying the transmit and receive radio frequencies for operation of RF transceiver 204.

As shown in FIG. 2, baseband modem 206 may include digital signal processor 208, which may perform physical layer (PHY, Layer 1) transmission and reception processing to, in the transmit path, prepare outgoing transmit data provided by protocol controller 210 for transmission via RF transceiver 204, and, in the receive path, prepare incoming received data provided by RF transceiver 204 for processing by protocol controller 210. Digital signal processor 208 may be configured to perform one or more of error detection, forward error correction encoding/decoding, channel coding and interleaving, channel modulation/demodulation, physical channel mapping, radio measurement and search, frequency and time synchronization, antenna diversity processing, power control and weighting, rate matching/de-matching, retransmission processing, interference cancelation, and any other physical layer processing functions. Digital signal processor 208 may be structurally realized as hardware components (e.g., as one or more digitally-configured hardware circuits or FPGAs), software-defined components (e.g., one or more processors configured to execute program code defining arithmetic, control, and I/O instructions (e.g., software and/or firmware) stored in a non-transitory computer-readable storage medium), or as a combination of hardware and software components. In some aspects, digital signal processor 208 may include one or more processors configured to retrieve and execute program code that defines control and processing logic for physical layer processing operations. In some aspects, digital signal processor 208 may execute processing functions with software via the execution of executable instructions. In some aspects, digital signal processor 208 may include one or more dedicated hardware circuits (e.g., ASICs, FPGAs, and other hardware) that are digitally configured to specific execute processing functions, where the one or more processors of digital signal processor 208 may offload certain processing tasks to these dedicated hardware circuits, which are known as hardware accelerators. Exemplary hardware accelerators can include Fast Fourier Transform (FFT) circuits and encoder/decoder circuits. In some aspects, the processor and hardware accelerator components of digital signal processor 208 may be realized as a coupled integrated circuit.

Communication device 200 may be configured to operate according to one or more radio communication technologies. Digital signal processor 208 may be responsible for lower-layer processing functions (e.g., Layer 1/PHY) of the radio communication technologies, while protocol controller 210 may be responsible for upper-layer protocol stack functions (e.g., Data Link Layer/Layer 2 and/or Network Layer/Layer 3). Protocol controller 210 may thus be responsible for controlling the radio communication components of communication device 200 (antenna system 202, RF transceiver 204, and digital signal processor 208) in accordance with the communication protocols of each supported radio communication technology, and accordingly may represent the Access Stratum and Non-Access Stratum (NAS) (also encompassing Layer 2 and Layer 3) of each supported radio communication technology. Protocol controller 210 may be structurally embodied as a protocol processor configured to execute protocol stack software (retrieved from a controller memory) and subsequently control the radio communication components of communication device 200 to transmit and receive communication signals in accordance with the corresponding protocol stack control logic defined in the protocol software. Protocol controller 210 may include one or more processors configured to retrieve and execute program code that defines the upper-layer protocol stack logic for one or more radio communication technologies, which can include Data Link Layer/Layer 2 and Network Layer/Layer 3 functions. Protocol controller 210 may be configured to perform both user-plane and control-plane functions to facilitate the transfer of application layer data to and from radio communication device 200 according to the specific protocols of the supported radio communication technology. User-plane functions can include header compression and encapsulation, security, error checking and correction, channel multiplexing, scheduling and priority, while control-plane functions may include setup and maintenance of radio bearers. The program code retrieved and executed by protocol controller 210 may include executable instructions that define the logic of such functions.

Communication device 200 may also include application processor 212 and memory 214. Application processor 212 may be a CPU, and may be configured to handle the layers above the protocol stack, including the transport and application layers. Application processor 212 may be configured to execute various applications and/or programs of communication device 200 at an application layer of communication device 200, such as an operating system (OS), a user interface (UI) for supporting user interaction with communication device 200, and/or various user applications. The application processor may interface with baseband modem 206 and act as a source (in the transmit path) and a sink (in the receive path) for user data, such as voice data, audio/video/image data, messaging data, application data, basic Internet/web access data, etc. In the transmit path, protocol controller 210 may therefore receive and process outgoing data provided by application processor 212 according to the layer-specific functions of the protocol stack, and provide the resulting data to digital signal processor 208. Digital signal processor 208 may then perform physical layer processing on the received data to produce digital baseband samples, which digital signal processor may provide to RF transceiver 204. RF transceiver 204 may then process the digital baseband samples to convert the digital baseband samples to analog RF signals, which RF transceiver 204 may wirelessly transmit via antenna system 202. In the receive path, RF transceiver 204 may receive analog RF signals from antenna system 202 and process the analog RF signals to obtain digital baseband samples. RF transceiver 204 may provide the digital baseband samples to digital signal processor 208, which may perform physical layer processing on the digital baseband samples. Digital signal processor 208 may then provide the resulting data to protocol controller 210, which may process the resulting data according to the layer-specific functions of the protocol stack and provide the resulting incoming data to application processor 212. Application processor 212 may then handle the incoming data at the application layer, which can include execution of one or more application programs with the data and/or presentation of the data to a user via a user interface.

Memory 214 may embody a memory component of communication device 200, such as a hard drive or another such permanent memory device. Although not explicitly depicted in FIG. 2, the various other components of communication device 200 shown in FIG. 2 may additionally each include integrated permanent and non-permanent memory components, such as for storing software program code, buffering data, etc.

In accordance with some radio communication networks, terminal devices 102 and 104 may execute mobility procedures to connect to, disconnect from, and switch between available network access nodes of the radio access network of radio communication network 100. As each network access node of radio communication network 100 may have a specific coverage area, terminal devices 102 and 104 may be configured to select and re-select \ available network access nodes in order to maintain a strong radio access connection with the radio access network of radio communication network 100. For example, terminal device 102 may establish a radio access connection with network access node 110 while terminal device 104 may establish a radio access connection with network access node 112. In the event that the current radio access connection degrades, terminal devices 102 or 104 may seek a new radio access connection with another network access node of radio communication network 100; for example, terminal device 104 may move from the coverage area of network access node 112 into the coverage area of network access node 110. As a result, the radio access connection with network access node 112 may degrade, which terminal device 104 may detect via radio measurements such as signal strength or signal quality measurements of network access node 112. Depending on the mobility procedures defined in the appropriate network protocols for radio communication network 100, terminal device 104 may seek a new radio access connection (which may be, for example, triggered at terminal device 104 or by the radio access network), such as by performing radio measurements on neighboring network access nodes to determine whether any neighboring network access nodes can provide a suitable radio access connection. As terminal device 104 may have moved into the coverage area of network access node 110, terminal device 104 may identify network access node 110 (which may be selected by terminal device 104 or selected by the radio access network) and transfer to a new radio access connection with network access node 110. Such mobility procedures, including radio measurements, cell selection/reselection, and handover are established in the various network protocols and may be employed by terminal devices and the radio access network in order to maintain strong radio access connections between each terminal device and the radio access network across any number of different radio access network scenarios.

In mobile radio communication, there may be a tendency to perform various operations including the management of radio access networks with the involvement of self-operating and decision-taking mechanisms that are data-driven involving AI/MLs. Such management operations may include performing various actions in order to manage radio access networks according to an output of AI/MLs. In various examples, such mechanisms may include the operations of multiple AI/MLs, which may operate independently from each other to output various parameters. Then, a further function (e.g. a network function) may output a management parameter based on the various output parameters of the multiple AI/MLs.

For example, some AI/MLs may output parameters associated with power management, some AI/MLs may output parameters associated with cell load, and some AI/MLs may output parameters associated with data throughput. The further function, which may also include an AI/ML, may output a management parameter based on the output parameters from at least some of these AI/MLs in order to provide a management service (e.g. the management of radio resources of a network access node) to the radio access network. For example, a traffic prediction AI/ML may provide an output representative of a predicted cell load, so that management AI/MLs pertaining to use-cases may leverage the predicted cell load to take actions (e.g. to determine management parameters) to optimize the performance of the radio network. The different RAN use cases may include overload control, power saving using cell on/off, bandwidth reduction, massive-MIMO channel on/off, channel quality feedback period determination, connection management, radio resource scheduling, etc.

Furthermore, each further function may have competing objectives associated with radio resource management of the radio access network, in particular, in terms of communication performance and usage of system resources. The prediction quality of the further functions may determine the functionality of the respective AI/MLs. There may be an innate imbalance in the current design requirements of these further functions due to cell condition characteristics and operator preferences. The imbalance may also change with time and space.

With exposure to terabytes (TBs) of data from multiple cells, different AI/ML based Radio Resource Management (RRM) algorithms are designed to learn from the user patterns, network data traffic patterns, and/or mobility patterns to optimize radio access network (RAN) operation. For example, RRM models associated with load balancing, CQI (Channel Quality Indicator) period optimization, connectivity optimization, optimization of RAN resources like MIMO usage, subband (frequency) usage, energy saving, etc. can be further optimized to support the workloads after learning past behaviors supported by the RAN.

There are certain key common and possibly central AI/ML models that can serve with different RRM algorithms, for example, load prediction, spectral efficiency prediction, traffic prediction, etc., which may help optimize RAN resources to meet workload requirements. Such an AI/ML model may have complexity at various levels, for example, deep Neural Networks (NNs), transformers. AI/ML models may require updates once deployed on the field, causing high latency in the inference and requiring high platform compute, memory, and storage capabilities for training as well as inference.

A particular network entity or network function may implement such RRM models including RRM algorithms.

For example, in open-radio access network (O-RAN) architecture, designated radio access network intelligent controllers (i.e. RIC, an entity as a software-defined component of the O-RAN architecture) may implement the RRM models. O-RAN architecture defines near-real time RICs and non-real time RICs, which may be differentiated by the processing time a functionally may perform a designated task, which may be less than 10 milliseconds for a near-real time RIC, and more coarse grain for a non-real time RIC, under assumption that the latency deadline is met and the RAN action may be determined based on AI/MLs implemented by them respectively. In general, a near-real time RIC may perform operations requiring lower latency than a non-real time RIC.

Particularly, within the context of communication systems, the quality of service may describe or indicate the overall performance of the communication service experienced by communicating entities (e.g. terminal devices, network access nodes, etc.). The quality of service (QoS) may be associated with, and affected by, various metrics associated with aspects of the communication service that may be based on measurements of data throughput, spectral efficiency (data throughput per designated spectral resources), packet loss, bit rate, latency, jitter, etc. In various scenarios, the QoS may be for an expense of spent resources of a system involved in radio access communication (e.g. network access node, an entity implementing the AI/ML, etc.). Such system resources may include power, computing, and/or storage resources.

Accordingly, optimization of system resources to maintain desired QoS is desirable in order to conserve resources, and may be particularly critical for mobile communication networks including radio access networks such as 5G and emerging next generation mobile radio communication technologies. Such optimization of system resources may take into account of QoS to maintain desired QoS levels. There may be an innate known tradeoff between QoS and system resources.

Various aspects of this disclosure may provide methods and devices to provide a balanced training to co-optimize QoS of the radio access service and overhead of system resources. In various aspects, a predefined preference representative of a preference of QoS over system resources overhead or a preference of system resources over QoS may affect the co-optimization. A mobile network operator (MNO) may prefer to prioritize either QoS or system resources in the network based on various attributes associated with the communication performance, such as geographical location, time of day, type of network traffic, etc. For example, in a cell or one or more cells located in downtown area, the MNO may prefer to prioritize QoS over system resources by placing a higher weight on the QoS level while ensuring sufficient conservation of system resources. On the other hand, at night time presumably subject to less network traffic, the MNO may prioritize conserving system resources by placing a higher weight on system resource conservation to save from computing or power consumption.

Various aspects may include handling the imbalance by dynamically balancing the training of AI/MLs associated with the above-mentioned further functions that may output management parameters using data characteristics and preferences/priorities of operators, with an intention to optimize the competing objectives associated with system resource conservation and communication performance within the RAN according to preferences of operators. Further aspects may include minimizing the data and system overhead. In various examples, the methods and devices disclosed herein may be implemented in a controller entity, such as a RIC.

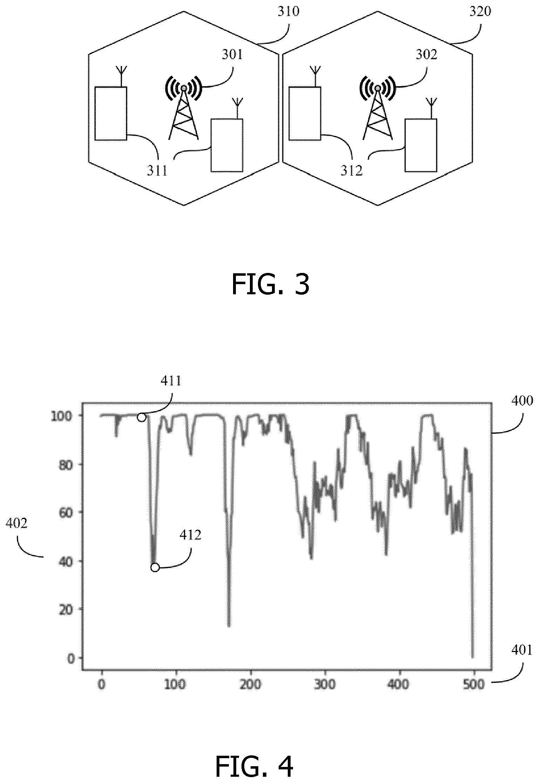

FIG. 3 shows an exemplary illustration of two cells of a mobile communication network. A cell may be a particular geographical region covered by one or more network access nodes providing radio access service. The size of a cell may depend on the mobile radio communication technology used by the network access node associated with the cell. For example, within the context of a wireless local area network (WLAN), a cell may have a radius of up to 100 meters, while within the context of cellular communication a cell may have a radius of up to 50 kilometers.

In this illustration, a first cell 310 is depicted as it includes a first network access node 301, such as a base station, and a second cell 320 is depicted as it includes a second network access node 302. The network access nodes 301, 302 may perform operations associated with the radio access network in order to provide radio coverage over the geographic areas that may be represented by the cells 310, 320 respectively. The first group of terminal devices 311 within the first cell 301 may access the mobile communication network over the first network access node 301, and the second group of terminal devices 312 within the second cell 302 may access the mobile communication network over the second network access node 302.

A network access node, such as a base station, may provide network access services to terminal devices within a cell. With the recent employment of distributed radio access networks, one or more remote radio units may be deployed for a cell to communicate with terminal devices within the cell using radio communication signals. Accordingly, in this illustration, the depicted network access nodes 301, 302 may include remote radio head units. Such remote radio units may be connected to further controller entities to communicate via wired (e.g. fronthaul) and/or wireless communications, and the controller entities (such as a controller unit, a central unit, a distributed unit) may manage radio resources associated with the one or more radio units within the cell.

Conditions associated with mobile radio communication tend to change in time and space due to various reasons, such as weather conditions, the number of communication devices, radio signal interference, relative location of radio access nodes to terminal devices, terrain, etc. Furthermore, operator preferences may also affect such conditions, as, for example, communication conditions obtained based on an operator preference towards the power conservation may not be the same as communication conditions obtained based on another operator preference towards data throughput.

For example, in a RAN environment, conditions of each cell of the first cell 301 and second cell 302 may be represented as various attributes, such as cell traffic volume, cell Physical Resource Block (PRB) usage, number of users (i.e. terminal devices), performance indicators, etc., may be dynamic with respect to time and space. For example, in a particular cell, the PRB usage load may vary with the time of the day and across multiple cells based on the geo-location. Moreover, the distribution of different cell conditions, for example, PRB usage, user density also may change with time. This degree of change of distribution varies from cell to cell as well as time, based on different characteristics of the cell, such as for example, cell topology, user density, average mobility, etc., which may indicate suitable massive MIMO configurations to maintain desired QoS. For example, a cell located near a highway may encounter more terminal devices during rush hours than any other times, considering that the highway is used more intensively by road users during rush hours.

In accordance with various aspects provided herein, conditions of a cell (e.g. the first cell 310 or the second cell 320) may include an attribute associated with a state of the respective cell that is related to radio communication, such as, user density (i.e. density/number of terminal devices) within the cell, cell load of the cell (e.g. a ratio based on number of used PRBs and number of available PRBs, or number terminal devices that are connected to the network access node), location of the cell, the topology associated with the location of the cell (i.e. the topology of the geographical area covered in the cell), mobility of terminal devices within the cell that are served by the respective network access node (e.g. UEs in RRC_Connected mode), intra-cell cross-interference (i.e. cross-interference associated with radio communication between the group of terminal devices) within the cell and/or inter-cell cross-interference (i.e. cross interference associated with radio communication between cells (e.g. between the first cell 310 and the second cell 320)). An attribute may be a QoS level that may include metrics associated with QoS (i.e. QoS metric), such as data throughput within the cell (i.e. data rate between network access nodes and one or more terminal devices within the cell), spectral efficiency within the cell (data throughput per designated spectral resource), latency, packet loss, etc. An attribute may be the overhead of system resources (i.e. system resource overhead) used to perform communications within the cell, which may include a metric (i.e. system resource overhead metric) associated with consumed power by a communication device (i.e. a network access node or a terminal device), computing resources used by a communication device, and/or storage resources used by a communication device, etc.

In accordance with various aspects provided herein, a network access node (e.g. the first network access node 301 and/or the second network access node 302) or a further network entity connected to the network access node may obtain and/or determine various information that may represent the conditions of a respective cell. In various examples, the various information that may represent the conditions of a respective cell may be referred to as cell data. In various examples, a terminal device may also obtain and/or determine various information that may represent the conditions of the cell in which the terminal device is served by respective network access node of the cell.

In accordance with various aspects provided herein, cell data may represent the conditions of a cell. The cell data may include one data item associated with each of the above-mentioned condition attributes at a particular instance of time (e.g. the latest sample), or a plurality of data items for a plurality of time instances for each attribute, each of the plurality of data items is associated with the respective attribute for an instance of time of the plurality of time instances in order to represent the history associated with the respective attribute for a particular period of time represented by the plurality of time instances. For example, the cell data may include a time-series data associated with at least some of the attributes. The cell data may include any data that may represent or indicate the conditions of the cell that are associated with the radio communication and the above-mentioned examples should not be considered limiting. In particular, the cell data may include a plurality of past data items for attributes, such as user density, cell load, mobility of terminal devices, QoS metrics and/or system resource overhead metrics, etc.

FIG. 4 shows an exemplary graph representing average high load state within a predefined period of time of cells. The x-axis 401 of the graph 400 represents a cell of 500 cells, and y-axis 402 of the graph 400 represents the percentage of time in which the respective cell operates with high load (e.g. the cell load is above a predefined cell load threshold) for a predefined period of time. In this graph, a first cell 411 is indicated such that network access nodes of the first cell 411 have almost always served a number of terminal devices that is above a predefined number (i.e. hence the high load). Furthermore, a second cell 412 is indicated such that network access nodes of the second cell 412 have only served a number of terminal devices that is above the predefined number only approximately 40% of the predefined period of time.

As indicated, AI/MLs may be employed within the mobile communication network (e.g. in a radio access network) to manage radio resources of the first cell and the second cell. Exemplarily, a first AI/ML may output a first management parameter and a radio resource managing entity (e.g. the respective network access node, or another entity within the RAN) may manage radio resources of the first cell 411 according to the first management parameter. Similarly, a second AI/ML may output a second management parameter and a radio resource managing entity may manage radio resources of the second cell 412 according to the second management parameter.

Within this context, in case the first AI/ML and the second AI/ML might have been trained using the same training data set, an imbalance associated with at least one of the first AI/ML and the second AI/ML may have been experienced, as conditions of the first cell 411 and the second cell 412 are different in terms of cell load. In other words, assuming that the training data set had included training input data only associated with cell conditions that are always under a scenario of high cell load, the output of the second AI/ML may be biased towards selections/classifications/predictions in a high cell load scenario. Ideally, the first AI/ML may have been trained with a first training data set including training input data representative of cell conditions of a cell operating almost exclusively under high cell load, and the second AI/ML may have been trained with a second training data set including training input data representative of cell conditions of a cell operating 40% of the time under high cell load.

The mismatch in the operating conditions of the cell and the training data set may lead to an imbalance (i.e. data imbalance, classification imbalance) associated with the second AI/ML in the above-mentioned example. Exemplarily, the conditions of the cell may be assumed to be well balanced with the conditions represented by the training data set, therefore training of an AI/ML may bias the respective AI/ML and would lead to biased/sub-optimal predictions. Furthermore, the predictions made by the AI/ML may not incorporate an objective of conserving system resources and/or maximizing QoS based on MNO preferences. Furthermore, the objective function (e.g. including mean error) may not capture the importance of certain predictions over other predictions in a different regime.

In certain aspects, the training data sets may include training input data representative of various conditions, such as training data input including various values/parameters for one or more designated attributes. However, it may be limiting in terms of resources and computations to tailor a different training data set for each of shown 500 cells according to the respective conditions of the cell, in particular, in terms of QoS and system resources. It is to be noted that cell load may be only one of the many attributes represented by training data input that is associated with the cell conditions. It may be desirable to detect the imbalance associated with a deployed AI/ML trained using training parameters and adjust the training parameters according to the detected imbalance. The training parameters may include learning parameters. The imbalance may be a data imbalance or a classification imbalance associated with the deployed trained AI/ML.

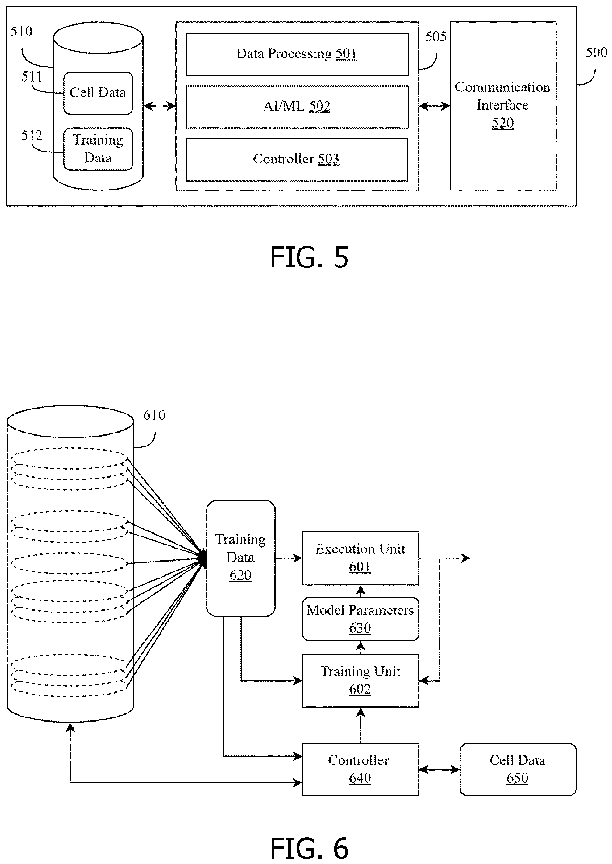

FIG. 5 shows an example of a device 500 according to various examples in this disclosure. The device 500 is depicted as a communication device (e.g. the communication device 200) in this illustrative example, including a processor 505, a memory 510, and a communication interface 520 configured to receive and transmit communication signals in order to communicate with further entities within the mobile communication network. The device 500 may be a network access node, or a device implementing a network function within the mobile communication network, such as a RIC. The communication interface 520 may include a transceiver. The processor 505 may include one or more processors which may include a baseband processor and an application processor. In various examples, the processor 505 may include a central processing unit, a graphics processing unit, a hardware acceleration unit, a neuromorphic chip, and/or a controller. The processor 505 may be implemented in one processing unit, e.g. a system on chip (SOC), or a processor. In accordance with various examples, the processor 505 may further provide further functions to process received communication signals. The memory 510 may store various types of information required for the processor 505, or the communication interface 520 to operate in accordance with various aspects of this disclosure.

The memory 510 may be configured to store cell data 511 representative of the one or more attributes associated with at least one state of the cell, such as conditions of the cell as exemplarily defined in accordance with FIG. 4. The processor 505 may have obtained the cell data 511 based on its operations, exemplarily as operations of a network access node serving terminal devices within the cell, by communicating with the terminal devices, or based on previous radio resource management operations for the cell. For example, the processor 505 may decode various messages received from terminal devices (e.g. UE reports, radio communication channel indicators and measurements associated with radio communication channels, UEInformationResponse) via the communication interface 520, by which the processor 505 may obtain through the collection of data, or via estimations, attributes associated with one or more states associated with conditions of the cell.

Furthermore, the processor 505 may obtain, through execution of radio resource management operations (by the device 500 itself, or by another entity which the device 500 may communicate via the communication interface 520), information with respect to user density, mobility of terminal devices, interference information, cell load of the cell, location of the cell, the topology associated with the location of the cell, mobility of terminal devices within the cell that are served by the respective network access node, and/or used by a radio resource managing entity associated with the network access node, in order to manage radio resources of the cell, cross-interference, power consumed by network access nodes providing radio access services to the cell, QoS metrics or attributes (e.g. data throughput, latency, and/or spectral efficiency measured and/or estimated by the device 500), system resource metrics (e.g. power consumption, computing resources usage, storage allocation for radio resource management, which may be of the device 500). The processor 505 may also obtain the location information associated with the cell by the location of the device 500 (e.g. stored in the memory 510, or via a positioning (e.g. GPS) system) and respective topology associated with the location of the device 500.

In various examples, the processor 505 may obtain the cell data 511 via the communication interface 520 by communicating with one or more other entities within the mobile communication network, and the one or more other entities may have obtained the respective information associated with the conditions of the cell similarly, as defined herein. In particular, the processor 505 may decode cell state information received from a further communication device that may manage radio resources of the cell of the mobile communication network and store the decoded cell state information in the memory 510 as the cell data 511.

The processor 505 may control the exchange of information with further entities of the mobile communication network via the communication interface 520. In particular, in case the processor 505 obtains the cell data 511 by receiving information (e.g. cell state information) associated with the conditions of the cell, the processor 505 may encode requests for further entities that provide the information associated with the conditions of the cell, to receive and update the cell data 511 stored in the memory 510 from time to time.

Furthermore, the memory 510 is depicted as it includes training data 512. The training data 512 may include the training data set. In various examples, the device 500 may receive the training data set, via the communication interface 520, from a training repository device configured to store the training data set, which the training repository device is external to the device 500.

Furthermore, some aspects provided herein may include determinations based on operator information representative of preferences of a mobile network operator (MNO) associated with the mobile network service provided by the cell. The MNO may prefer an operation prioritizing QoS over system resource conservation, or prioritizing system resource conservation over QoS. In accordance with various aspects provided herein, the device 500 may communicate via the communication interface 520 with an entity of the mobile communication network, which the entity may provide the operator information including information representative of the above-mentioned preferences of the MNO. For example, the operator information may further include information representing cells for which imbalance associated with a trained AI/ML is to be detected, identifiers of respective trained AI/MLs at which imbalance is detected, a performance threshold, a weight parameter associated with the QoS or system resources preferred by the MNO, etc. The entity that provides the operator information may be an orchestrator entity of the mobile communication network (e.g. a service management and orchestration (SMO) entity in O-RAN).

In accordance with various aspects provided herein, the device 500 may include, one or more artificial learning / machine learning models (AI/ML) model used to manage radio resources in accordance with various aspects of this disclosure within a cell based on the cell data 511. The term "model" used herein may be understood as any kind of algorithm, which provides output data based on input data provided to the model (e.g., any kind of algorithm generating or calculating output data based on input data). The device 500 may implement the AI/ML. The device 500 may be a computing device or an apparatus suitable for implementing the AI/ML. The processor 505, or another processor as provided in this disclosure may implement the AI/ML. According to various aspects of this disclosure, other types of AI/ML implementations may include a further processor that may be internal or external to the processor (e.g.an accelerator, a graphics processing unit (GPU), a neuromorphic chip, etc.), or a memory may also implement the AI/ML. The AI/ML may be configured to provide output data based on input data and AI/ML parameters (model parameters). The AI/ML may include a trained AI/ML, in which the AI/ML parameters are configured according to a training process. In various aspects, AI/ML parameters include parameters configured to control how input data is transformed into output data.

The processor 505 is depicted to include various functional units that are configured to provide various functions as disclosed herein, associated with a processor (e.g. the processor 505) that may be used within a device (e.g. the device 500). The skilled person would recognize that the depicted functional units are provided to explain various operations that the processor 505 may be configured to perform. Similarly, the memory 510 is depicted to include the cell data 511 as a block, however, the memory may store the cell data 511 in any kind of suitable configuration or mechanism. Furthermore, the AI/ML unit 502 is depicted as it is implemented in the processor 505 only as an example, and any type of AI/ML implementation which may include the implementation of the AI/ML in an external processor, such as an accelerator, a graphics processing unit (GPU), a neuromorphic chip, or in a cloud computing device, or in an external communication device may also be possible according to any methods.

The processor 505 may include a data processing module 501 that is configured to process data and obtain at least a portion of the cell data 511 as provided in various examples in this disclosure to be stored in the memory 510. In various examples, the cell data 511 may include information for the past conditions of the cell for at least within a period of time in a plurality of instances of time (e.g. as a time-series data). The data processing module 501 may obtain at least a portion of the cell data 511 and the context information 512 according to the operations of the device.

The AI/ML unit 502 may implement an AI/ML (i.e. one or more AI/MLs). The AI/ML may be configured to receive input data with certain constraints, features, and formats. Accordingly, the data processing module 501 may obtain input data, that is based on the cell data 511, to be provided to the AI/ML respectively, to obtain an output of the AI/ML. In various examples, the data processing module 501 may provide input data including the cell data 511 to the AI/ML. The input data may include attributes of the cell data 511 associated with a period of time or a plurality of consecutive periods of time. In various examples, the data processing module 501 may convert the cell data 511 to an input format suitable for the respective AI/ML (e.g. input feature vectors compatible with the first AI/ML and the second AI/ML respectively) so that the AI/ML may process the cell data 511.

The AI/ML may include any type of AI/ML suitable for the purpose. The AI/ML may include a decision tree model or a rule-based model suitable for various aspects provided herein. The AI/ML unit 502 may include a neural network. The neural network may be any type of artificial neural network. The neural network may include any number of layers, including an input layer to receive input data, an output layer to provide respective output data. A number of layers may be provided between the input layer and the output layer (e.g. hidden layers).

For example, the neural network may be a feed-forward neural network in which the information is transferred from lower layers of the neural network close to the input to higher layers of the neural network close to the output. Each layer may include neurons that receive input from a previous layer and provide an output to a next layer based on certain AI/ML (e.g. weights) parameters adjusting the input information.

The AI/ML may include a recurrent neural network in which neurons transfer the information in a configuration in which the neurons may transfer the input information to a neuron of the same layer. Recurrent neural networks (RNNs) may help to identify patterns between a plurality of input sequences, and accordingly, RNNs may be used to identify, in particular, a temporal pattern provided with time-series data and perform estimations based on the identified temporal patterns. In various examples of RNNs, long short-term memory (LSTM) architecture may be implemented. The LSTM networks may be helpful to perform classifications, processing, and estimations using time series data. An LSTM network may include a network of LSTM cells that may process the attributes provided for an instance of time as input data, such as attributes provided the instance of time, and one or more previous outputs of the LSTM that have taken in place in previous instances of time, and accordingly, obtain the output data.

In accordance with various aspects, the AI/ML may include a reinforcement learning model. The reinforcement learning model may be modeled as a Markov decision process (MDP). The MDP may determine an action from an action set based on a previous observation which may be referred to as a state. In a next state, the MDP may determine a reward based on the current state that may be based on current observations and the previous observations associated with previous state. The determined action may influence the probability of the MDP to move into the next state. Accordingly, the MDP may obtain a function that maps the current state to an action to be determined with the purpose of maximizing the rewards. Accordingly, input data for a reinforcement learning model may include information representing a state, and an output data may include information representing an action.

The AI/ML may include a convolutional neural network (CNN), which is an example for feed-forward neural networks that may be used for the purpose of this disclosure, in which one or more of the hidden layers of the neural network include one or more convolutional layers that perform convolutions for their received input from a lower layer. The CNNs may be helpful for pattern recognition and classification operations. The CNN may further include pooling layers, fully connected layers, and normalization layers.

In various aspects, the AI/ML may include a trained AI/ML that is configured to provide the output as provided in various examples in this disclosure based on the input data and AI/ML parameters obtained via the training. In some aspects, the AI/ML may include a training algorithm that a training unit (e.g. the training unit of the AI/ML unit 502) may implement. The training unit may train the AI/ML based on training parameters. The processor (or another processor communicatively coupled to the processor) may implement the training unit. Accordingly, the processor may have trained the AI/ML by adjusting AI/ML parameters based on training parameters (learning parameters) that are representative of a designated objective function. The training parameters may further include further parameters, such as learning rate, number of layers of a neural network AI/ML, activation functions, or some further training parameters defined herein. The training unit may receive the training parameters as hyperparameters of the respective AI/ML.

In other words, the AI/ML may be in a configuration that it is already trained (e.g. the AI/ML parameters in a memory are already set for the purpose). It may desirable for the AI/ML unit 502 to include the training unit, in order to perform optimizations according to the output of inferences as provided in this disclosure. Furthermore, the AI/ML unit 502 may also perform further training after deployment with an intention to increase accuracy. The AI/ML unit 502 may accordingly be considered to include an execution unit and a training unit that may implement the training algorithm using an objective function. The execution unit may include hardware and/or software components associated with (e.g. configured to) providing output data based on the input data and AI/ML parameters. The training unit may include hardware and/or software components associated with (e.g. configured to) adjust the AI/ML parameters according to a training algorithm (e.g. based on objective function and measurements/training output data).

The training unit may adjust the AI/ML parameters of the respective model based on outputs and inputs (i.e. output data and input data) and an objective function. The training unit may train the AI/ML according to the objective function as exemplary provided in this disclosure. The training unit may provide the training data 512 to the AI/ML to train the AI/ML 502. In various examples, the processor and/or the AI/ML unit 502 itself may include the training unit, or another entity that may be communicatively coupled to the processor may include the training unit and provide the training data 512 to the device.

For example, the training input data for the exemplary AI/ML 502 may include, or may be based on, training cell data generated or obtained to represent various states of a cell (or of a plurality of cells) as cell conditions. The training cell data may include information representative of one or more attributes designated to represent various conditions of a cell. Each training input data item may include cell data associated with conditions of a cell for an instance of a period of time. Training input data may further be associated with training output data representing desired outcomes concerning each set of training input data. Training output data may indicate, or may represent, the desired outcome with respect to training input data, so that the training unit may provide necessary adjustments to respective AI/ML parameters in consideration of the objective function.

The objective function, which sometimes may be referred to as criterion, may represent the objective desired from an AI/ML as a mathematical representation. It is a mathematical function to be minimized or maximized based on the configuration of the objective and measurements associated to measure the quality (i.e. accuracy, etc.) of the output of the AI/ML. An exemplary objective function may include, and may also be referred to, a cost function, a loss function, or an error function if the objective is to be minimized. It may exemplarily include a reward function if he objective is to be maximized. The training unit may measure the quality of the configuration of the AI/ML using the objective function, based on the output of the AI/ML. For example, in supervised training with a training data set including data pairs, the training unit measure the quality of the AI/ML by comparing the output of the AI/ML according to a respective training input data with the respective training output data using the objective function. For an objective function to be minimized, this can exemplarily be denoted as below, in which $\theta^*$ denoting updated model parameters, $\theta$ denoting model parameters before this training procedure, $D^{training}$ denoting the training data set with N data pairs, including $x_n$ as training input data (e.g. input vector) and $y_n$ as training output data where n=1...N, and f() denoting the objective function including a loss function $l$, $\hat{y}$ denoting output of the AI/ML according to the model parameters before this training procedure, and $\Omega(\theta)$ being a regularization parameter with a regularization weight $\lambda$:

$$\theta^* = arg_\theta minf(\theta, D^{training}) \qquad (1)$$

$$f(\theta, D^{training}) = \frac{1}{N}\left(\sum_{n=1}^{N} l(y_n, \hat{y}(x_n; \theta))\right) + \lambda\Omega(\theta) \qquad (2)$$

An objective function may be designated according to desired output of the AI/ML. An exemplary, and commonly used objective function may include a mean squared error loss that returns the same error value for both overpredictions and underpredictions. Within the context, the overpredictions are outputs of the AI/ML that are above the true output (i.e. $\hat{y}(x_n; \theta) > y_n$ in the formulation above), and underpredictions are outputs of the AI/ML that are below the true output (i.e. $\hat{y}(x_n; \theta) < y_n$ in the formulation above), whether the true output is the training output data, or the measurements for optimization after being deployed. In various examples, the objective function may be an asymmetric objective function (e.g. including an asymmetric loss function) returning different error/loss/objective values for overpredictions and underpredictions. In various examples, the difference may be denoted mathematically with a weight parameter w. In the above exemplary objective function, if the objective function is parametrized for each sample, an asymmetric objective function may be represented as, i denoting an index associated with input data (e.g. training input data), and $w_p$ denoting the prediction weight associated for overpredictions and underpredictions 0<w<1:

$$f(\theta, D^i) = \begin{cases} w_p l(y_i, \hat{y}(x_i; \theta)) + \lambda_i \Omega_i(\theta); \; where \; \hat{y}(x_i; \theta) > y_i \\ l(y_i, \hat{y}(x_i; \theta)) + \lambda_i \Omega_i(\theta); \; where \; \hat{y}(x_i; \theta) < y_i \end{cases} \qquad (3)$$

The skilled person would recognize that the weighing of overpredictions and underpredictions may be implemented in any known method. In the above-denoted example, the prediction weight $w_p$ is configured to penalize overpredictions less than the underpredictions. Each overprediction or underprediction case may have separate designated weights, or the prediction weight may have been applied to underpredictions in order to penalize underpredictions less than overpredictions. The training unit may obtain a predetermined prediction weight as a hyperparameter. Accordingly, in this illustrative example, the AI/ML may be an AI/ML trained and/or to be trained via an asymmetric objective function weighing underpredictions and overpredictions based on at least one received prediction weight parameter (i.e. a training parameter) which may be received as a hyperparameter.

In accordance with various aspects provided herein, an AI/ML may have been trained via a use of multi-objective optimization in order to take multiple objectives into consideration. There are various considerations for the implementation of multi-objective optimization in AI/MLs. In a multi-objective AI/ML, the training unit may perform the above-mentioned training with an objective function including multiple objectives. The multiple objectives may be weighed with one or more weight parameters respectively. An exemplary notation of training with a multiple-objective function may be as below following the notation of the formula (1), in which f() denotes the multi-objective objective function to be minimized and $g_1()$, $g_2()$, ..., $g_m()$ denote multiple objective functions to be minimized together:

$$\theta^* = arg_\theta min f(g_1(\theta, D^{training}), g_2(\theta, D^{training}), \ldots, g_m(\theta, D^{training})) \quad (4)$$

In a weighed multiple-objective function, each independent function of $g_j()$, j denoting the index of the respective g objective function, may be associated with a weight parameter to weigh the independent objective functions respectively for the weighed multiple-objective function. The training unit (e.g. the training unit of the AI/ML unit 502 associated with the AI/ML) may obtain independent objective function weights $w_{o,1} \ldots w_{o,m}$ as hyperparameters (i.e. a training parameter). As indicated, there are various considerations for the implementation of multi-objective optimization in AI/MLs. In one exemplary representation for an objective function including a sum of multiple objective functions for two objectives, the formula (2) may be expressed as, i denoting an index associated with input data (e.g. training input data), $w_{o,1}$ denoting a first weight associated with a first loss function $l_1$ that is associated with a first objective, $w_{o,2}$ denoting a second weight associated with a second loss function $l_2$ that is associated with a second objective:

$$f(\theta, D^i) = w_{o,1} l_1(y_n, \hat{y}(x_n; \theta)) + w_{o,2} l_2(y_n, \hat{y}(x_n; \theta)) + \lambda_i \Omega_i(\theta) \quad (5)$$

In accordance with various aspects of this disclosure, the AI/ML may include an objective function including a first objective associated with QoS within the cell and a second objective based on system resources associated with the management of radio resources within the cell. For example, the first objective may be to maximize the QoS within the cell (e.g. maximize data throughput for a network access node) while the second objective may be to minimize the consumption of the system resources (i.e. or maximize the conservation of the system resources, such as to minimize power consumption, minimize computation overhead, etc.).

A trained AI/ML (e.g. the AI/ML) may have been obtained via an online and/or offline training. A training unit may perform various operations with respect to the training at various aspects, including online training, offline training (i.e. batch training), and optimizations based on the inference results. The AI/ML may take any suitable form or utilize any suitable technique for training process. For example, the AI/ML may be trained using supervised learning, semi-supervised learning, unsupervised learning, or reinforcement learning techniques.

In unsupervised learning, the model may be built from a training set of data including only inputs and no desired outputs. The unsupervised model may be used to find structure in the data (e.g., grouping or clustering of data points), illustratively, by discovering patterns in the data. Techniques that may be implemented in an unsupervised learning model may include, e.g., self-organizing maps, nearest-neighbor mapping, k-means clustering, and singular value decomposition.

Reinforcement learning models may include positive feedback (also referred to as reward) or negative feedback to improve accuracy that is obtained via designated objective function. A reinforcement learning model may attempt to maximize one or more objectives/rewards. Techniques that may be implemented in a reinforcement learning model may include, e.g., Q-learning, temporal difference (TD), and deep adversarial networks.

In supervised learning, the AI/ML may be obtained using a training set of data including both inputs and corresponding desired outputs (illustratively, input data may be associated with a desired or expected output for that input data). Each training instance may include one or more input data items and a desired output. The training unit may train the AI/ML based on iterations through training instances and according to training parameters stored in a memory (e.g. the memory 510) using an objective function to teach the AI/ML to estimate the output for new inputs (illustratively, for inputs not included in the training set). In semi-supervised learning, a portion of the inputs in the training set may be missing the respective desired outputs (e.g., one or more inputs may not be associated with any desired or expected output).

In other words, training data 512 may include a plurality of data sets, in which each data set is representative of the conditions of a cell based on the cell data (conditions of the cell for a particular period of time/at a particular instance of time) and an output data associated with the conditions of the cell represented by the respective data set. The skilled person would recognize that the exemplary AI/ML disclosed herein is explained that may have many configurations, but in implementation, the AI/ML is to be configured to receive input data based on designated attributes that are representative of the conditions of the cell and to provide output data including designated parameters. Accordingly, each data set of the training data 512 for that particular AI/ML may include training inputs based on the same designated attributes that are representative of various conditions of a cell or various cells and the respective output data including the same designated attribute.

From the equation (2), it can also be seen that in addition to the objective function, the selection of training samples $D^{training}$ is important to obtain the desired accuracy for the AI/ML. If there is a mismatch between the training samples $D^{training}$ and the conditions in which the AI/ML is deployed for, the data imbalance may result in biasing a respective AI/ML as the model parameters would have been updated according to the training samples, which will be disclosed at a later stage in this disclosure. Furthermore, the training unit may further train a trained AI/ML after its deployment with further training data sets or based on measurements taken from the environment and using these measurements instead of $y_n$ for an inference receiving the respective input data and the output based on the respective input data of which its effect is measured with the measurements.

The training unit may train the AI/ML by providing training input data to the input of the AI/ML and it may adjust AI/ML parameters of the AI/ML based on the output of the AI/ML and training output data associated with the provided training input data with an intention to make the output of the AI/ML more accurate using the designated objective function (i.e. supervised training). Furthermore, the training unit may further train the AI/ML based on inferences after deployment. With each inference, the AI/ML may provide an output data based on input data that is based on the cell data. Furthermore, the training unit may obtain performance measurements associated with outputs of the AI/ML and may further adjust the AI/ML parameters based on one or more output data and obtained performance measurements (e.g. data throughput, system resource consumption, etc.) associated with the one or more output data (e.g. measurements associated with effects provided by an action taken according to the one or more output data) using the designated objective function.

The processor 505 may include a controller unit 503 configured to control the training algorithm used by the AI/ML unit 502 (i.e. used by the training unit), or within the context of FIG. 6 to control the training unit 602. The controller unit 503 may detect an imbalance associated with the AI/ML. The imbalance associated with the AI/ML may be data imbalance or classification imbalance of the AI/ML. The controller unit 503 may further determine, based on conditions of the cell (i.e. the cell data 511), one or more parameters to be used to adjust the objective function used by the AI/ML unit 502 for the AI/ML Furthermore, the controller unit 503 may cause an adjustment to the training parameters used by the AI/ML unit 502 based on the determined one or more parameters. The adjustment caused by the controller unit 503 may adjust the objective function used by the AI/ML

For this purpose, the controller unit 503 may compare the output of the AI/ML and conditions of the cell represented by the cell data 511. The controller unit 503 may compare a plurality of output data provided by the AI/ML with the cell data 511 to detect an imbalance associated with the AI/ML. It is to be noted that each output data may be taken for a past instance of time, and the controller unit 503 may compare each output data provided by the AI/ML before a predetermined period of time with the cell data 512 stored in the memory 510 in order to compensate for the time needed for an output data to affect the conditions of the cell. For example, the controller unit 503 may calculate, for each output data of the plurality of output data, a performance score (e.g. a prediction error, or a value based on a predefined mapping operation according to the cell conditions), and the controller unit 503 may determine that an imbalance associated with the AI/ML is detected in case cumulative prediction errors for the plurality of output data is above a predetermined threshold.

In accordance with various aspects, the controller unit 503 may calculate the performance score based on various attributes representative of cell conditions provided by the cell data 511. In various examples, the controller unit 503 may calculate the performance score based on a predefined mapping operation that is configured to map information within the cell data 511 representing one or more attributes associated with the condition of the cell to a value. The one or more attributes of the conditions of the cell may include at least one of, or any combination of, an attribute representative of a load of the cell (i.e. cell load conditions), an attribute representative of the quality of service within the cell (i.e. QoS conditions), and/or an attribute representative of usage of system resources to manage radio resources and/or to transmit and receive radio communication signals (i.e. system resource conditions).

Exemplary cell load condition attributes may include a number of terminal devices within the cell, PRB usage, number of terminal devices having a network traffic above a predefined threshold. Exemplary QoS condition attributes may include data throughput, spectral efficiency, latency, and packet loss. Exemplary system resource condition attributes may include power consumption, usage of computing resources, and usage of memory resources. The skilled person would recognize that in case the output data of the AI/ML include data matching one of these attributes, the performance score may also indicate the prediction error of the AI/ML.

Furthermore, the controller unit 503 may control the AI/ML to cause the AI/ML to take cell conditions or operator preferences into consideration. The controller unit 503 may control the training process associated with the AI/ML by adjusting the training parameters. The controller unit 503 may adjust the training parameters or the controller unit 503 may cause the training unit of the AI/ML unit 502 to adjust the training parameters. In various examples, the adjustment of the training parameters may include adjustment of training parameters representing the objective function. In other words, the controller unit 503 may cause the objective function used to train the AI/ML to be adjusted.

FIG. 6 shows an exemplary illustration of a supervised training with an AI/ML unit (e.g. the AI/ML unit 502). The AI/ML unit may include an execution unit 601 configured to receive input data and provide output data based on the received input data and model parameters 630 stored in a memory. The AI/ML unit may further include a training unit 602 configured to obtain output data and adjust the model parameters 630 based on training parameters (not shown) stored in a memory. In operation of the AI/ML, in a configuration deployed at which the execution unit receives input data based on real cell conditions, the training unit 602 may adjust the model parameters 630 further based on measurements or feedback received representative of the effect of output data. In the operation of the AI/ML of supervised training, the training unit 602 may adjust the model parameters 630 further based on training data.

For various aspects, a device (e.g. the device 500) including the AI/ML unit may be communicatively coupled to a training repository 610. Alternatively, or additionally, a memory (e.g..the memory 510) of the device may include the training repository 610 including a plurality of training data sets, each data set including one or more data pairs (i.e. training input data and a respective training output data). It may be desirable to train the AI/ML only with a subset of the plurality of training data sets. The selection of the data sets within the subset may be subject to a random selection, or a selection based on one or more criteria. The device may accordingly obtain training data 620 including a subset of the plurality of training data sets as training data 620 including a plurality of data pairs to train the AI/ML. In various examples, the training data may include only one training data set or all training data sets. The training unit 602 may initiate the training process after the training data 620 is obtained.

The execution unit 601 may obtain a plurality of output data based on a plurality of training input data respectively according to the model parameters. The training unit 602 may accordingly adjust the model parameters 630 based on the plurality of output data obtained by the execution unit 601, the plurality of training output data, and the training parameters including an objective function. The training unit 602 may accordingly determine model parameters that minimize (or maximize) the objective function, given the training output data and the obtained plurality of output data, and adjust the model parameter 630 accordingly.

In accordance with various aspects provided herein, in case the obtained training data 620 from the training data repository does not correspond to conditions in which the AI/ML is deployed into (i.e. cell conditions), the obtained AI/ML model with the adjusted model parameters may be biased or may further be optimized. In accordance with various aspects provided herein, a controller (e.g. the controller unit 503) 640 may control the training unit 602 to cause the training unit 602 to take cell conditions or operator preferences into consideration. The controller 640 may control the training unit 602 by adjusting the training parameters. The controller 640 may adjust the training parameters or the controller may cause the training unit 602 to adjust the training parameters. In various examples, the adjustment of the training parameters may include adjustment of training parameters representing the objective function.

In accordance with various aspects, each training input data of each data pair of the training data (or each data pair) 620 may be associated with a cell condition classification that is representative of a predetermined classification for the cell conditions represented by the respective training input data. The controller 640 may determine the current conditions of the cell based on the cell data 650 and determine whether the respective training input data matches the respective cell condition classification associated with the respective training input data. Exemplarily, the training data 620 may include information representing the cell condition classification for each training input data.

For example, a cell condition classification may be a classification associated with cell load. In a simple example, the training data 620 may include a first plurality of training data pairs associated with a first classification with respect to the cell load (e.g. a high cell load, a cell load above a predefined threshold). The first plurality of training data pairs may include a first plurality of training input data that are designated or arranged to represent high cell load conditions of a cell. Similarly, the training data 620 may include a second plurality of training data pairs associated with a second classification with respect to the cell load (e.g. a low cell load, a cell load below the predefined threshold). The second plurality of training data pairs may include a second plurality of training input data that are designated or arranged to represent low cell load conditions of a cell.

For example, a cell condition classification may be a classification associated with QoS attributes. In a simple example, the training data 620 may include a first plurality of training data pairs associated with a first classification with respect to the QoS attributes (i.e. communication performance) (e.g. a high QoS, a QoS metric above a predefined threshold). The first plurality of training data pairs may include a first plurality of training input data that are designated or arranged to represent higher communication performance within a cell. Similarly, the training data 620 may include a second plurality of training data pairs associated with a second classification with respect to the QoS attributes (e.g. a low QoS, a QoS metric below the predefined threshold). The second plurality of training data pairs may include a second plurality of training input data that are designated or arranged to represent lower communication performance within a cell.

For example, a cell condition classification may be a classification associated with system resource attributes. In a simple example, the training data 620 may include a first plurality of training data pairs associated with a first classification with respect to the usage of system resources (e.g. a high system resource usage, a system resource usage metric above a predefined threshold). The first plurality of training data pairs may include a first plurality of training input data that are designated or arranged to represent higher system resource usage within a cell. Similarly, the training data 620 may include a second plurality of training data pairs associated with a second classification with respect to the usage of system resources (e.g. a low system resource usage, a system resource usage metric below the predefined threshold). The second plurality of training data pairs may include a second plurality of training input data that are designated or arranged to represent lower system resource usage within a cell.

Alternatively, or additionally, the controller 640 may evaluate the training data 620 and assign one or more cell condition classifications to each training input data. For example, the controller 640 may evaluate the cell load attribute within each training input data and assign a cell load classification for the respective training input data. Similarly, the controller 640 may evaluate the QoS attribute within each training input data and assign a QoS classification for the respective training input data. Similarly, the controller 640 may evaluate the system resource usage attribute within each training input data and assign a system resource classification for the respective training input data. The evaluation may exemplarily include comparing respective attributes (e.g. data items in input vectors) with predefined thresholds, or via a predefined mapping operation.

In various examples, the controller 640 may detect the imbalance based on one or more cell condition classifications associated with the training data and the conditions of the cell represented by the cell data 650 (current/latest obtained conditions/conditions of the cell for a predetermined period of time) stored in a memory. The controller 640 may determine that there is an imbalance associated with the AI/ML by comparing the conditions of the cell represented by the cell data 650 and the one or more cell condition classifications associated with the training data used to train the AI/ML. The controller 640 may either access all training data used to train the AI/ML from its initialization, or only a portion of the plurality of training data sets used to train the AI/ML (e.g. last n number of training data sets used to train the AI/ML, n being an integer between 1 and N, N being the number of all training data sets used to train the AI/ML). In this illustrative example, the controller 640 determines the training data 620 stored in the memory.

Exemplarily, the controller 640 may determine the number of data pairs matching the conditions of the cell by comparing the conditions of the cell and the one or more cell condition classifications. In one example, the controller 640 may evaluate the cell data 650 and assign one or more cell condition classifications to the cell data in a manner that is similar to assigning one or more cell condition classifications to train input data. For example, the controller 640 may evaluate information representing the cell load attribute provided by the cell data 650 and assign a cell load classification to the conditions of the cell. Similarly, the controller 640 may evaluate the information representing the QoS attribute provided by the cell data 650 and assign a QoS classification to the conditions of the cell. Similarly, the controller 640 may evaluate the information representing the system resource usage provided by the cell data 650 and assign a system resource classification to the conditions of the cell.

The evaluation may exemplarily include comparing respective attributes (e.g. respective metrics in the cell data) with predefined thresholds, or via a predefined mapping operation. The controller 640 may determine the number of data pairs matching the conditions of the cell by comparing the assigned classifications to the conditions of the cell and the one or more conditions classifications associated with the training input data of the training data 620. The controller 640 may determine whether there is an imbalance associated with the AI/ML based on the number of data pairs in the training data 620 that match the conditions of the cell.

In an illustrative example, in consideration of the second cell 412 with respect to FIG. 4 that has only served a number of terminal devices that is above the predefined number only approximately 40% of the predefined period of time (i.e. high cell load for 40% of the time, the controller 640 may determine whether the training data 620 used to train the AI/ML matches the cell conditions to detect an imbalance. In this illustrative example, assuming that 95% of the training data 620 used to train the AI/ML includes a high cell load classification, the controller 640 may determine that there is an imbalance associated with the AI/ML. The controller 640 may apply a threshold based on an identification of the training data input matching the conditions of the cell. In this example, the controller 640 may apply a threshold to a ratio of the number of training input data matching conditions of the cell over the total number of training input data within the training data 620.

It is to be recognized that, the matching is not to be expected as a %100 match. The controller 640 may determine whether the training data 620 and/or one or more cell condition classifications associated with the training data 620 match the conditions of the cell based on a predefined criterion (or criteria) based on the use case. In the above-mentioned example, the training data 620 may have a representation of approximately 50% cell load, and the controller 640 may determine that the training data 620 matches the cell conditions.

Alternatively, or additionally, the controller 640 may obtain a performance score for the one or more outputs of the AI/ML based on the cell data 650 to detect the imbalance. The controller 640 may use the attributes of the cell data including cell load attributes, QoS attributes, or system resource attributes to obtain the performance score. In various examples, the controller 640 may calculate the performance score based on a predefined mapping operation that is configured to map information provided by these respective attributes within the cell data 640 to a value. The controller 640 may estimate prediction errors associated with the one or more outputs of the AI/ML using the attributes. If the estimated prediction error is above a predetermined threshold, the controller 640 may determine that there is an imbalance associated with the AI/ML.

In a combined implementation of detecting an imbalance according to the prediction errors and the classified conditions associated with the training input data, the controller 640 may prioritize the determination based on the prediction error. In other words, in such a combined procedure, the controller 640 may only determine that there is an imbalance based on the estimated prediction errors. For example, the controller 640 may first determine whether the estimated prediction errors are above a predefined threshold. If the controller 640 determines that the estimated prediction errors is above the predefined threshold, then the controller 640 may determine whether the training data 620 matches the conditions of the cell. Accordingly, a more computational task may be conditioned only in case the prediction errors are high.

Furthermore, the controller 640 may determine one or more parameters to adjust the training parameters of the AI/ML, in particular, to adjust the objective function used by the training unit 602. In various examples, the controller 640 may access the training parameters stored in a memory, which the training unit 602 access to perform training of the AI/ML. In various examples, the controller 640 may obtain the training parameters stored in the memory and adjust the training parameters stored in the memory. The controller 640 may communicate with the AI/ML (e.g. the training unit 602) to exchange information associated with the training parameters over a communication interface.

In a scenario where the objective function includes an asymmetric objective function (e.g. an objective function denoted exemplarily in formula (3)) configured to weigh underpredictions and overpredictions differently, the controller 640 may determine weight parameters to be used to weigh underpredictions and overpredictions differently using the objective function. The controller 640 may determine the weight parameters based on the detection of the imbalance. In various examples, the controller 640 may further determine the weight parameters based on the operator information representing a preference or prioritization between the communication performance and system resource conservation. For an objective function including a first prediction weight parameter to weigh overpredictions and a second prediction weight parameter to weigh underpredictions, the controller 640 may determine the first prediction weight parameter and the second prediction weight parameter based on the detected imbalance, or alternatively based on the operator information.

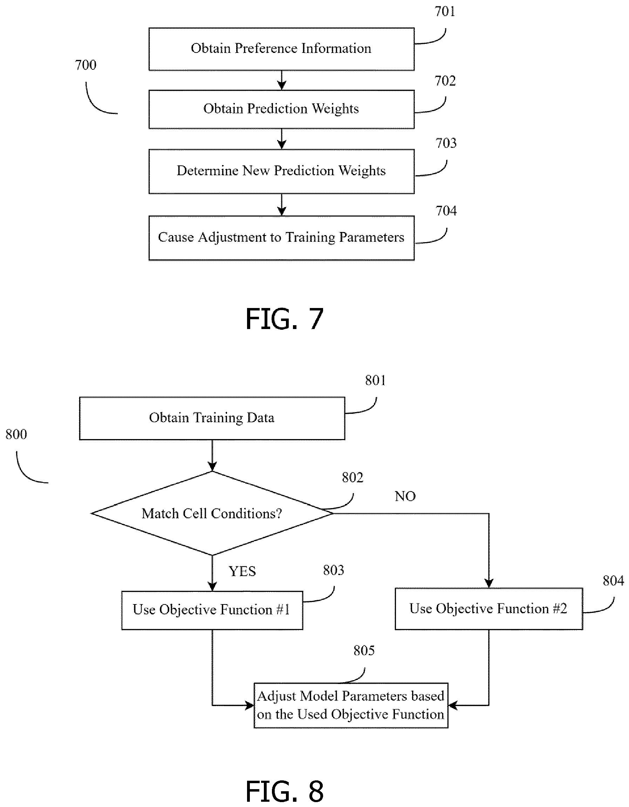

FIG. 7 shows an example of a procedure 700 to determine new prediction weight parameters for an objective function. The objective function may include an asymmetric objective function exemplified in formula (3). The objective function may be configured to weigh underpredictions and overpredictions based on one or more prediction weight parameters.

A controller (e.g. the controller 640) may obtain 701 preference information representative of a preference or prioritization between data throughput and system resource conservation. Furthermore, the controller may access the training parameters of an AI/ML to obtain 702 prediction weight parameters that are in use/were used in the latest training of the AI/ML. The controller may determine 703 new prediction weights based on the operator information and the obtained prediction weight parameters. The controller may adjust the obtained prediction weight parameters, such that the adjusted prediction weight parameters decrease the prediction errors of the AI/ML. The controller may adjust the obtained prediction weight parameters, such that the adjusted prediction weight parameters may change the optimization (i.e. training) of the AI/ML towards the preference or prioritization represented by the AI/ML. The adjusted prediction weight parameters would weigh overpredictions and underpredictions different than weighing performed by the obtained weight parameters. The controller may determine whether to increase or decrease one or more of the obtained weight parameters based on estimated prediction errors of the AI/ML. In various examples, the controller may determine 703 the new prediction weights based on further the conditions of the cell.

For example, assuming that the objective function is based on a performance metric associated with a QoS metric, such as data throughput, spectral efficiency, etc. Overpredictions may indicate that the AI/ML has outputted a parameter to provide a communication performance that is over a desired/required QoS metric. Similarly, underpredictions may indicate that the AI/ML has outputted a parameter to provide a communication performance that is below a desired/required QoS metric. The skilled person would recognize that these assumptions for the indication of overpredictions and underpredictions are dependent on the nature of the objective function defining how the performance metric is calculated by the objective function. In this illustrative example, assuming that the operator information indicates a prioritization over system resource conservation, the controller may adjust the obtained prediction weight parameters by penalizing the overpredictions more than that were penalized with the obtained prediction weight parameters. Accordingly, assuming that a first prediction weight parameter is used to weigh overpredictions, and a second prediction weight parameter is used to weigh underpredictions, the controller may increase the obtained first prediction weight parameter to obtain a new first prediction weight parameter (or decrease the obtained second prediction weight parameter).

Accordingly, the controller may cause 704 an adjustment to the training parameters based on the new prediction weight parameters, so that the training unit of the AI/ML may use the asymmetric objective function with new prediction weight parameters (i.e. with an adjusted objective function) for further training of the AI/ML. The controller may further cause the AI/ML to be further trained or re-trained using the adjusted objective function.

In another example, an objective function may include a mean square error cost function that may include the average of the sum of the squared difference between actual and predicted load as a first norm of the objective function. Similarly, a second norm of the objective function may include a loss function configured to predict the median future load. It is to be noted that, in the first norm and the second norm, originally, the respective cost functions may not weigh overprediction errors and underpredictions errors, and they do not account for either countering the bias or balancing the imbalance associated with the AI/ML For example, in the case of prioritization of system resource conservation over QoS, underpredictions and overpredictions may be weighed differently based on the operator information. It is to be noted that the cost minimization associated with the first norm and the second norm in terms of load prediction could be misleading. Therefore, it may be desirable to have an asymmetric objective function that is tunable via prediction weight parameters.

In accordance with various aspects, a training unit (e.g. the training unit 602) may be configured to selectively adjust model parameters of the AI/ML differently based on the conditions of the cell. In other words, the training unit is configured to adjust the model parameters of the AI/ML selectively based on either a first set of training parameters or a second set of training parameters according to the conditions of the cell. In various aspects, the training unit may selectively perform a first mapping operation according to a first mathematical function or a second mapping operation according to a second mathematical function based on the conditions of the cell. The training unit may determine which mapping operation to apply based on the conditions of the cell obtained from the cell data stored in a memory.

FIG. 8 shows an exemplary procedure 800 of a training unit to adjust model parameters of an AI/ML. The training unit may include the training unit 602. The training unit may obtain 801 the training data from the training data set (e.g. the training data 620). In various examples, the training data to be used to train the AI/ML may be stored in a memory. Accordingly, the training unit may obtain the training data stored in the memory to adjust model parameters of the AI/ML according to the designated training algorithm (e.g. minimizing/maximizing an objective function). In this illustrative example, the training input data includes a data pair including a training input data and a training output data.

The training unit may determine 802 whether the training input data matches the conditions of the cell. The training unit may apply methods provided in this disclosure to determine whether the training input data matches the conditions of the cell. The training input data may compare the training input data and information provided by the cell data representing the conditions of the cell. The training input data may have one or more cell condition classifications associated with the training input data, and the training unit may, similar to the controller 640, determine whether the training input data matches the conditions of the cell based on the one or more cell condition classifications associated with the training input data. The training unit may further determine one or more classifications for the conditions of the cell represented by the cell data, similar to the controller 640. In various examples, a controller (e.g. the controller 640) may determine whether the training input data matches the conditions of the cell.

In case the training input data matches the conditions of the cell, the training unit may select 803 a first objective function. In case the training input data does not match the conditions of the cell, the training unit may select 804 a second objective function. The training unit may then accordingly use the selected objective function to perform calculations based on the respective training output data and the output of the execution unit based on the training input data to adjust 805 the model parameters of the AI/ML. In accordance with various aspects provided herein, a controller (640) may cause the training unit to apply different objective functions to the training data set including a plurality of training data pairs to compensate the imbalance associated with the AI/ML, in particular for cases in which the imbalance is a data imbalance (i.e. mismatch between training conditions and deployment conditions).

According to this illustrative example, the second objective function may be configured to affect adjustments of the AI/ML parameters less than the first objective function. In other words, given the same training data pair, an adjustment to the AI/ML parameters (i.e. a distance between previous AI/ML parameters and adjusted AI/ML parameters) based on the first objective function may be greater than an adjustment to the AI/ML parameters based on the second objective function. In other words, the second objective function may cause the training unit to adjust the AI/ML parameters with a less weight than the first objective function.

In accordance with various aspects, a training unit (e.g. the training unit 602) may adjust AI/ML parameters using an objective function that may exemplarily be represented as below, which may be referred to as a balancing objective function to distinguish other objective functions defined herein, in which i denotes an index associated with input data (e.g. training input data), $\theta$ denotes model parameters before this training procedure, $D^i$ denotes the training input data with index i, including $x_i$ as training input data (e.g. input vector) and yi as training output data, f() denotes the objective function including a loss function $l$, $\hat{y}$ denotes the output of the AI/ML according to the model parameters before this training procedure, and $\Omega(\theta)$ denotes a regularization parameter with a regularization weight $\lambda$, and $w_b$ denotes the balancing weight parameter to apply different weights to a respective loss function based on the conditions of the cell and the training input data (i.e. cell condition classifications associated with the training input data):

$$f(\theta, D^i) = \begin{cases} w_b l(y_i, \ \hat{y}(x_i; \theta)) + \lambda_i \Omega_i(\theta); \ where \ x_i \ matches \ conditions \\ l(y_i, \ \hat{y}(x_i; \theta)) + \lambda_i \Omega_i(\theta); \ where \ x_i \ does \ not \ match \ conditions \end{cases}$$

(6)

Referring back to FIG. 6, the controller 640 may determine the prediction parameters as exemplarily referred to in the procedure 700, and the controller 640 may further determine balancing weight parameters based on the conditions of the cell, that may be in response to the detection of the imbalance. Considering the procedure, and the exemplary objective function provided in formula (6), the training unit may be configured to adjust the AI/ML parameters 630 according to an objective function exemplified as below; $c_o$ denoting the conditions of the cell, $w_{p,o}$ denoting the prediction weight parameter for overpredictions, $w_{p,u}$ denoting the prediction weight parameter for underpredictions, wb denoting the balancing weight, while the regularization component is removed for brevity:

$$f(\theta, D^i) =$$

$$\begin{cases} w_b w_{p,u} l(y_i, \ \hat{y}(x_i; \theta)); where \ x_i \ matches \ c_0 \ and \ l(y_i, \ \hat{y}(x_i; \theta)) < 0 \\ w_b w_{p,o} l(y_i, \ \hat{y}(x_i; \theta)); where \ x_i \ matches \ c_0 \ and \ l(y_i, \ \hat{y}(x_i; \theta)) > 0 \\ w_{p,u} l(y_i, \ \hat{y}(x_i; \theta)); where \ x_i \ does \ not \ match \ c_0 \ and \ l(y_i, \ \hat{y}(x_i; \theta)) < 0 \\ w_{p,o} l(y_i, \ \hat{y}(x_i; \theta)); where \ x_i \ does \ not \ match \ c_0 \ and \ l(y_i, \ \hat{y}(x_i; \theta)) > 0 \end{cases}$$

(7)

The skilled person would recognize that the training unit 602 may be configured to determine the AI/ML parameters according to the balancing objective function in different implementations, such as improving the procedure 800 by introducing two more objective functions, or by any other means. It is further to be seen that the balancing weight parameter associated with the cases where conditions indicated by the training input data do not match the cell conditions is set to 1, and accordingly $w_b$ is defined only for cases where conditions indicated by the training input data match the cell conditions, which would be enough to weigh them differently. In various aspects, the training unit 602 may be configured to receive each of the above-mentioned weight parameters (or further/lesser parameters configured to weigh underpredictions and overpredictions separately and to weigh a predefined objective function component according to the cell conditions) as a hyperparameter, and adjust a predetermined objective function accordingly, in order to weigh underpredictions and overpredictions differently, and/or in order to weigh adjustments to AI/ML parameters differently based on the conditions of the cell (e.g. whether the training data matches the conditions of the cell).

The controller 640 may provide information representative of the weight parameters to adjust the objective function used by the training unit 602. In accordance with various aspects provided herein, the controller 640 may determine at least one prediction weight parameter (e.g. $w_{p,o}$, $w_{p,u}$) to weigh underpredictions and overpredictions based on the operator information. The controller 640 may determine at least one balancing parameter (wb) based on at least the conditions of the cell.

In accordance with various aspects, the controller 640 may, alternatively, or additionally, determine the at least prediction weight parameter and/or the at least one balancing parameter iteratively. Based on the latest set respective weight parameters, the controller 640 may adjust the respective weight parameters and cause the training unit 602 to perform a training using a training data set to adjust model parameters. The controller 640 may then calculate a performance score for one or more output data of the AI/ML (e.g. calculation of prediction errors, etc.). Based on the obtained performance score, the controller 640 may further adjust the weight parameters until the calculated performance score is within a predefined threshold.

Considering that the controller 640 may further be configured to perform any known optimization method to optimize the respective weight parameters according to the conditions of the cell, the controller 640 may perform any known optimization algorithm to determine the respective weight parameters. Moreover, the controller 640 may configure the training unit 602 to apply any known optimization associated with determination of hyperparameters with respect to the AI/ML. For example, the controller 640 may perform a random search, a grid search to determine the respective weight parameters.

In various examples, the controller 640 may perform Bayesian optimization to determine the respective weight parameters to be provided to the training unit 602, in particular the prediction weight parameters. Bayesian optimization may include a modeling operation to model the objective function (e.g. via a surrogate function) and an acquisition operation that may determine the next sample of hyperparameters, in particular, based on possible options to explore and possible options to exploit by predicting particular regions that may return better results. The modeling operation may initialize with an initial probability distribution over a function that is to be optimized. With each observation associated with the objective function, the training unit may perform an acquisition operation to select antenna configurations for exploration or exploitation, with an intention to optimize the objective function.

In various aspects, the controller 640 may determine the balancing weight parameters based on the conditions of the cell and the training data 620 that is to be used to train the AI/ML. For this purpose, the controller 640 may receive information representing that the training data 620 is stored in a memory, and can be used to train the AI/ML. The controller 640 may evaluate the training data 620 in a manner that is used to detect the imbalance. In various examples, the controller 640 may have already evaluated the training data 620 to detect the imbalance, and the controller 640 may simply use the information based on the evaluation performed to detect the imbalance. In various examples, the training data 620 may have changed after the detection of the imbalance. The controller 640 may determine the balancing weight parameters based on the number of training input data that matches the conditions of the cell.

In various examples, the controller 640 may classify the training data 620 into two classifications, namely a first subset of training data including a first plurality of training data pairs having at least one of cell load attribute, a QoS attribute, and/or a system resource attribute, which the one or more respective attributes match the conditions of the cell (i.e. respective attributes of the cell) represented by the cell data 650, and a second subset of training data including a second plurality of training data pairs, having at least one of cell attribute, a QoS attribute, and/or a system resource attribute, which the one or more respective attributes do not match the conditions of the cell based on a matching criterion. The matching criterion (or criteria) may include a mapping operation or a threshold associated with each of the respective attributes.

In various examples, the controller 640 may determine a matching score for each training data pair based on a predefined mapping operation that maps the one or more of cell load attribute, a QoS attribute, and/or a system resource attribute included in the training data pair and respective attributes represented by the cell data to the matching score. A simple example of such mapping operation may be $P_i = (Load_i - Load_0)^2 + (QoS_i - QoS_0)^2 + (Res_i - Res_0)^2$; P representing the matching score, i representing an index of a training data pair, $Load_i$ representing cell load metric represented by the respective training data pair, $Load_0$ representing cell load conditions of the cell according to the cell data 650, $QoS_i$ representing QoS metric represented by the respective training data pair, $QoS_0$ representing QoS metric associated with the cell according to the cell data 650, $Res_i$ representing system resource metric represented by the respective training data pair, $Res_0$ representing system resource metric associated with the cell according to the cell data 650. The controller 640 may apply a normalization to respective metric pairs according to the designated data structure. Accordingly, the controller 640 may apply a threshold to the matching scores of all training data pairs in the training data and classify the training data accordingly 620 into two classifications.

Based on the classification of the training data 620, the controller 640 may determine the balancing weight parameters based on the number of training data pairs classified in each classification. In an example, the controller 640 may determine the balancing weight parameters according to the ratio of the number of training data pairs classified in each classification.

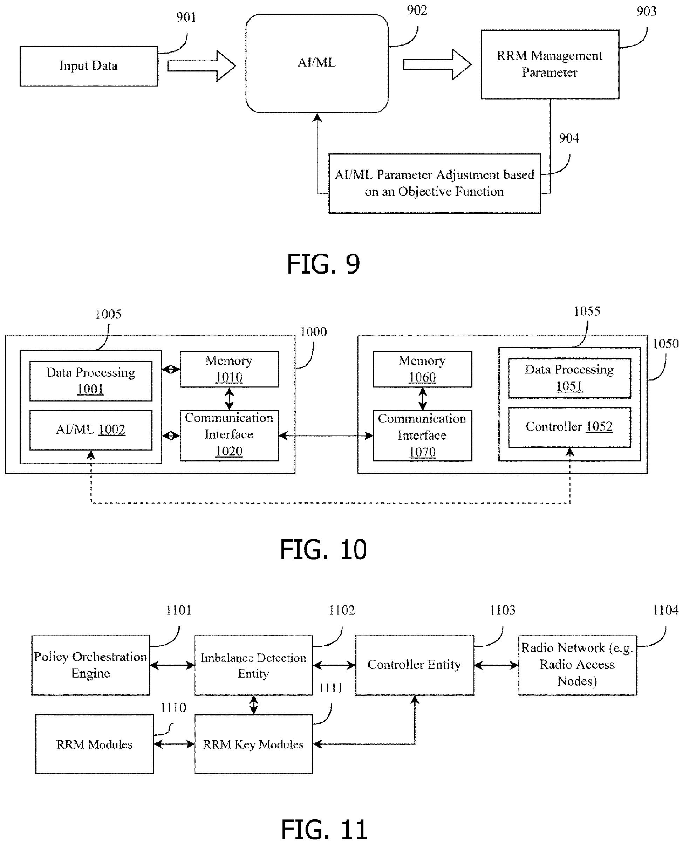

FIG. 9 shows an exemplary illustration of an AI/ML trained to output a management parameter used to manage radio resources of a radio access network. A processor may implement the AI/ML 902. The AI/ML 902 may receive input data 901 and provide an output, via its execution unit (e.g. the execution unit 601), including an RRM management parameter 903 based on the received input data 901 and AI/ML parameters (i.e. model parameters) stored in a memory at each inference. The nature and/or structure of the input data 901 and the output data 903 are not disclosed for brevity, but any known input-output pairs implemented by any known AI/ML used to manage radio resources of a mobile radio communication network may be taken for exemplary purposes. In one example, the AI/ML 902 may receive the input data 901 that is based on the cell data, and provide output data 903 including a radio resource management parameter, such as a predicted load of the cell or a predicted network traffic within the cell .

In accordance with various aspects provided herein, the AI/ML 902 may, via its training unit (e.g. the training unit 602), adjust the AI/ML parameters (e.g. the model parameters 630) based on an objective function including the balancing loss function as defined below, $l_{w_b,w_p}(X,\hat{X})$ denoting the balancing loss function for input balancing weight parameter $w_b$ and input prediction weight parameter $w_p$ based on $\hat{X}$ denoting predicted cell load by the AI/ML 902 for a period of time including instances of time (t+k; k=1...K) and X denoting the actual cell load at the respective instance of time (i.e. a measured cell load at t+k), k being an index associated with the instance of time, $e_k$ denoting prediction errors associated with the k-th instance of time ( $X_{t+k} - \widehat{X_{t+k}}$ ), $S_L$ denoting the set of load corresponding to a designated regime of importance based on the operator information representing a prioritization of system resource conservation over QoS:

$$l_{w_b,w_p}(X, \hat{X}) = \sum_{k:\, e_k > 0,\, X_{t+k} \in S_L} w_b w_p(e_k) +$$

$$\sum_{k:\, e_k < 0,\, X_{t+k} \in S_L} w_b(-1)(e_k) + \sum_{k:\, e_k > 0,\, X_{t+k} \notin S_L} w_p(e_k) +$$

$$\sum_{k:\, e_k > 0,\, X_{t+k} \notin S_L} (-1)(e_k) \tag{8}$$

From the formula (8) it can be seen that a controller (e.g. the controller 640) may determine the balancing weight parameter $w_b$ to balance the mismatch in the number of samples of in the desired region via optimization, hence the balancing loss function includes the balancing weight parameter $w_b$ with a multiplication operation. Accordingly, via the use of the balancing loss function in formula (8), the training unit may choose training data samples (i.e. training data pairs) for which the actual load is greater than the predicted load ($e_k > 0$ condition) to apply the first term of the formula (8) $\sum_{k:e_k > 0, X_{t+k} \in S_L} w_b w_p(e_k)$.

Similarly, the second term of the formula (8) $\sum_{k:e_k < 0, X_{t+k} \in S_L} w_b(-1)(e_k)$ may correspond to the overprediction ($e_k < 0$ condition). Furthermore, in the first term corresponding to underprediction, the prediction error may be weighed by the prediction weight parameter $w_p$ as compared to the second term. In case the controller determines a high prediction weight parameter (e.g. $w_p = 9$), that may indicate for this exemplary balancing loss function, that overprediction is favored, considering the prediction weight of the second term to weigh overprediction error by 1. The controller may determine to favor overprediction in order to prioritize the system resource conservation over QoS.

Furthermore, in the third term of the formula (8) $\sum_{k:e_k > 0, X_{t+k} \notin S_L} w_p(e_k)$ and the fourth term of the formula (8) $\sum_{k:e_k > 0, X_{t+k} \notin S_L} (-1)(e_k)$, the exemplary balancing loss function may correspond to load samples that do not match the cell conditions, while maintaining the weighing provided by the prediction weight parameter. The controller may determine to weigh the third term and the fourth term, $w_b$ time less than the first term and the second term to balance the detected imbalance.

The controller may calculate the appropriate balancing weight parameter based on a desired load range for the AI/ML 902. The controller may estimate the balancing weight parameter based on the ratio of the number of training data pairs including cell load attribute that is not in a designated range (e.g. below a higher threshold and above a lower threshold) to the number of training data pairs including cell load attribute that is in the designated range. Accordingly, with this balancing weight parameter determination, the controller may cause the training unit to amplify the prediction error for the training data pairs that are in the designated range, given such training data pairs are a minority.

The controller may determine prediction weight parameters according to a prediction model configured to predict the cell load according to the conditions of the cell for a configuration associated with prediction weight parameter candidates to be assigned as the prediction weight parameter. Accordingly, the controller may obtain a predicted load vector, and each vector element of the predicted load vector may be associated with a respective prediction weight parameter candidate. The controller may accordingly select one of the prediction weight parameter candidates based on load prediction performance according to the predicted load vector. In various examples, the controller may determine prediction weight parameters iteratively or via optimization techniques or based on the operator information as exemplified in this disclosure.

FIG. 10 shows an exemplary illustration of two devices. In various aspects, it may be desirable to implement aspects associated with the AI/ML unit (i.e. the AI/ML unit 502) and aspects associated with the controller (i.e. the controller 503) in a distributed manner. For example, the respective controller may configure and control multiple AI/MLs within the mobile communication network. Multiple entities (e.g. multiple devices) of the mobile communication network may implement the multiple AI/MLs. According a designated entity may control the multiple AI/MLs of the mobile communication network.

This illustration includes a first device 1000 that may be referred to as AI/ML implementing device 1000, and a second device 1050 that may be referred to as controller implementing device 1050 referring that the processor of the controller implementing device 1050 may be configured to perform various operations in order to configure and control the AI/ML implemented by the AI/ML implementing device 1000.

The AI/ML implementing device 1000 may include a processor 1005 (e.g. the processor 505) including a data processing unit 1001 (e.g. the data processing unit 501) and an AI/ML unit 1002 (e.g. the AI/ML unit 502), a memory 1010 (e.g. the memory 510), and a communication interface 1020 (e.g. the communication interface 520) which are configured to according to the disclosure with respect to FIG. 5 provided herein. Similar to what was disclosed for the device 500, the AI/ML unit 1002 may include an execution unit (e.g. the execution unit 601) and a training unit (e.g. the training unit 602). The AI/ML unit 1002 may implement an AI/ML configured to provide an output to manage radio resources within a cell of a mobile communication network.

The controller implementing device 1050 may similarly include a processor 1055 (e.g. the processor 505) including a data processing unit 1051 (e.g. the data processing unit 501) and a controller unit 1052 (e.g. the controller unit 503, the controller 640), a memory 1060 (e.g. the memory 510), and a communication interface 1070 (e.g. the communication interface 520) which are configured to according to the disclosure with respect to FIG. 5 provided herein. Accordingly, the processor 1055 may be configured to detect an imbalance associated with the trained AI/ML implemented by the AI/ML implementing device 1000, in which the trained AI/ML is trained based on training parameters representing an objective function. The processor 1055 may determine, based on the conditions of the cell, one or more parameters (e.g. weight parameters) to be used to adjust the objective function associated with the trained AI/ML. The processor 1055 may further cause an adjustment to the training parameters

In order to provide communication between the AI/ML implementing device 1000 and the controller implementing device 1050, the communication interfaces 1020, 1070 of the devices may be configured to communicatively coupled to each other. The processors 1005, 1055 may be configured to encode/decode information (e.g. messages) exchanged in-between. Accordingly, the devices 1000, 1050 may perform any type of communication associated with the operations of the AI/ML unit 502 and the controller unit 503, in particular between the training unit 602 and the controller 640 with respect to FIG. 5 and FIG. 6.

The above-mentioned communications between the devices 1000, 1050 may include the exchange of the cell data. In various examples, the controller implementing device 1050 may communicate with the AI/ML implementing device 1000 to receive the cell data representing the conditions of the cell. In various examples, the controller implementing device 1050 may communicate with the AI/ML implementing device 1000 to receive training parameters of the AI/ML. The training parameters may include training parameters representing the objective function used by the AI/ML. Additionally, or alternatively, the training parameters may include weight parameters (e.g. prediction weight parameters, balancing weight parameters). Furthermore, the controller implementing device 1050 may communicate with the AI/ML implementing device 1000 to receive the training data (e.g. training data 620) that has been used to train the AI/ML. In various examples, the training data may include training data that is to be used to train the AI/ML in a future period of time.

Furthermore, the controller implementing device 1050 may communicate with the AI/ML implementing device 1000 to receive output data provided by the AI/ML to calculate prediction errors. For this purpose, the AI/ML implementing device 1000 may store the input data and the output data of the AI/ML in the memory 1010, exemplarily for a predefined period of time (i.e. a plurality of input data and a plurality of output data respectively for a plurality of inferences of the execution unit). The controller implementing device 1050 may request the input data/output data stored in the memory 1010 of the AI/ML implementing device 1000. The AI/ML implementing device 1000 may the send the input data/output data to the controller implementing device 1050. Furthermore, the controller implementing device 1050 may send information to the AI/ML implementing device 1000 to cause the AI/ML to be trained with adjusted training parameters (i.e. with an adjusted objective function). The sent information may include the determined one or more parameters (e.g. weight parameters), and/or information representing the adjusted objective function. The AI/ML implementing device 1000 may, based on the received information indicating an adjustment to training parameters, adjust the training parameters used by the AI/ML. The AI/ML implementing device 1000 may further cause the training unit to further train the trained AI/ML or re-train the AI/ML with the adjusted training parameters.

Furthermore, the controller implementing device 1050 and the AI/ML implementing device 1000 may communicate with a further entity in the mobile communication network, for example, to obtain training data in a scenario that the further entity may be a training data repository. Alternatively, the further entity may be a network access node or a controller entity of the mobile communication network to obtain the cell data. In various examples, the AI/ML implementing device 1000 may communicate with a network access node or a controller entity to provide output data to manage radio resources of the respective cells. The controller implementing device 1050 may communicate with an orchestrator entity to receive the operator information.

FIG. 11 shows an exemplary illustration of various entities of a mobile communication network. It is to be noted that the exemplary illustration may indicate a logical structure, in which one or more of the entities of the mobile communication network 1100 may be implemented by the same physical entity, or a distributed physical entity (a plurality of devices operating collectively) may implement one of the entities of the mobile communication network 1100. The mobile communication network 1100 may include an orchestrator entity, a policy orchestration engine 1101 configured to oversee orchestration aspects, management aspects, and automation of RAN elements.

The policy orchestration engine 1101 may be configured to communicate with at least an imbalance detection entity 1102 that may include a device (e.g. the device 500, the controller implementing device 1150) including a processor configured to detect an imbalance associated with a trained AI/ML, in accordance with various aspects provided in this disclosure. The imbalance detection entity 1102 may also communicate with a controller entity 1103 that may control configurations of a radio network 1104 including one or more network access nodes. For example, the controller entity 1103 may configure and/or control radio resources of the radio network 1104. In various examples, the controller entity 1103 may also operate within the radio network 1104, even it may operate as a network access node of the radio network 1104.

The mobile communication network 1100 may further include a plurality of RRM modules 1110 that one or more entities may implement, and a plurality of RRM key modules 1111 that one or more entities may implement. The plurality of RRM key modules 1111 may operate based on outputs of the plurality of RRM modules 1110. The plurality of RRM key modules may 1111 provide parameters or outputs that are used to manage radio resources of the radio network 1104. In this illustrative example, the plurality of RRM key modules 1111 may provide their output to the controller entity 1103 which may control radio access nodes within the radio network in terms of radio resource management.

Within this exemplary mobile communication network 1100, an application of an entity may be configured to perform various aspects provided herein for the respective entity. Applications associated with different entities may communicate with each other via application programming interfaces (APIs) to receive and/or send data, information, messages, etc. In this illustrative example, an RRM key module 1111 may identify a presence of an entity that is configured to detect an imbalance, namely the imbalance detection entity 1102, via an API designated to identify an entity that is configured to detect an imbalance associated with a trained AI/ML

The controller entity 1103 may, optionally in response to a request from the imbalance detection entity 1102 or from an RRM key module 1111, encode cell state information associated with one or more cells, for which the respective RRM key module 1111 requests an imbalance detection associated with radio resource management of the one or more cells, send the encoded cell state information to the imbalance detection entity 1102. Accordingly, the imbalance detection entity 1102 may obtain the cell data representative of conditions of the one or more cells based on received encoded cell state information. The controller entity 1103 may send the cell state information periodically, or in response to a request from the imbalance detection entity 1102, in order to update cell data for further instances or periods of time.

Furthermore, the imbalance detection entity 1102 may receive operator information from the policy orchestration engine 1101, and the operator information may represent preferences of an MNO, in particular configurations and commands provided by the policy orchestration engine 1101 associated with the one or more cells. The operator information may represent various information as provided in this disclosure, exemplarily the prioritization and/or preference in terms of system resource conservation or QoS for one or more cells, an identifier for each cell, or a group of cells associated with the plurality of RRM key modules 1111, an identifier for RRM key modules for which an imbalance may be detected. The imbalance detection entity 1102 may receive the operator information via an API designated to receive policies from the policy orchestration engine 1101. It is to be noted that the policy orchestration engine 1101 may update the operator information from time to time to change prioritization/preferences associated with the respective cells.

Furthermore, the imbalance detection entity 1102 may receive information from the respective RRM key module 1111 requesting a detection of imbalance. Considering that the respective RRM key module 1111 is implemented in an AI/ML implementing entity (e.g. the AI/ML implementing entity 1100), the received information may further include a request associated with the detection of the imbalance, cell identifiers, training data, training parameters, etc. In various examples, the imbalance detection entity 1102 may also receive the cell data from the respective RRM key module 1111, which may be instead of received the cell data from the controller entity 1103. The information may include information, in particular, information associated with the AI/ML(s) providing output that is used to manage radio resources, corresponding prioritization or preference between QoS and system resource conservation (e.g. current prediction weight parameters used by the AI/ML(s)), associated cell condition classifications, performance metrics (e.g. prediction errors, thresholds associated with detecting imbalance, etc.), percentage of training samples matching the cell conditions, etc.

Accordingly, in accordance with various aspects provided in this disclosure, the imbalance detection entity 1102 may detect an imbalance associated with the AI/ML(s) of the respective RRM key module 1111. The imbalance detection entity 1102 may obtain the training data used to train the AI/ML(s). Furthermore, the imbalance detection entity 1102 may fetch training data sets associated with the training of the AI/ML(s) from a training repository, if needed. In various examples, the imbalance detection entity 1102 may indicate the imbalance associated with the training of the AI/ML(s) to the training repository to cause the training repository to provide training data for the AI/ML(s) including more training samples matching the conditions of the cell. In various examples, the imbalance detection entity 1102 may evaluate the training data provided by the training repository to the AI/ML(s). Once the imbalance detection entity 1102 determines parameters associated with the objective function(s) used by the AI/ML(s), the imbalance detection entity 1102 may send information to the respective RRM key module 1111 to cause an adjustment to the training parameters. In various examples, the training repository may implement the training unit. Accordingly, the imbalance detection entity 1102 may send the information to the training repository as well.

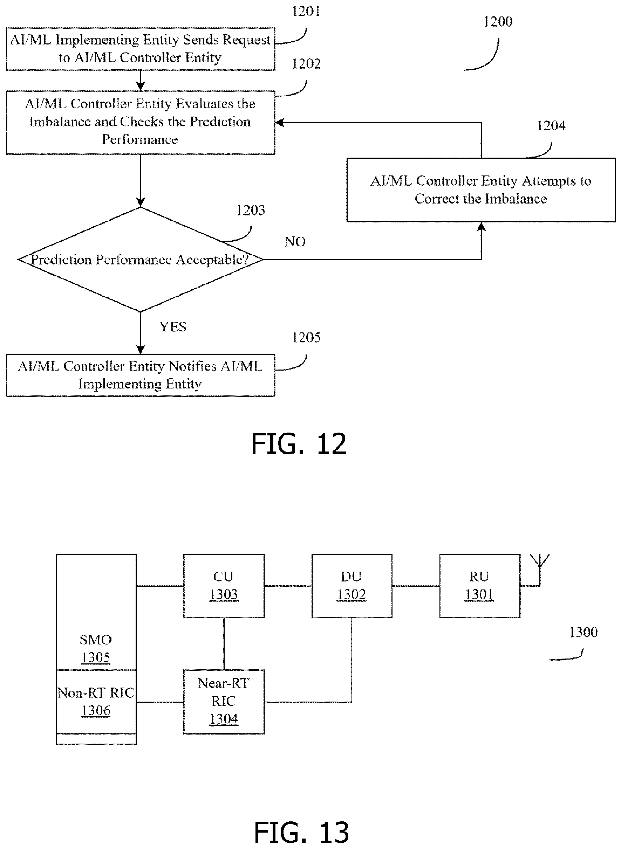

FIG. 12 shows a flow diagram associated with detection of an imbalance. The flow diagram 1200 may be applicable to various aspects provided herein, such as an AI/ML implementing entity may exemplarily be an AI/ML unit of a device (e.g. the AI/ML unit 502), an AI/ML implementing entity (e.g. the AI/ML implementing entity 1000), or an entity implementing an RRM Key module (RRM key module 1111), and similarly, an AI/ML controller entity may exemplarily be a controller of a device (e.g. the controller 503), a controller implementing device (e.g. the controller implementing device 1150), or an imbalance detection entity (e.g. the imbalance detection entity 1102).

The AI/ML implementing entity may send 1201 a request to the AI/ML controller entity with respect to one or more AI/MLs implemented by the AI/ML implementing entity. The AI/ML implementing entity may send the request periodically, or aperiodically in response to detection of increasing prediction errors, one or more prediction errors above a designated threshold, in response to a received request, etc. Based on the received request, the AI/ML controller entity may evaluate 1202 whether there is an imbalance associated the one or more AI/MLs. The AI/ML controller entity may perform various operations disclosed herein to detect an imbalance for the one or more AI/MLs. The AI/ML controller entity may, in particular, determine whether prediction performance of the one or more AI/MLs are within a designated range.

In case the AI/ML controller entity determines 1203 that the prediction performance is not acceptable (e.g. below a predetermined prediction error threshold) for which some of examples are provided in this disclosure, the AI/ML controller entity may attempt 1204 to correct the imbalance. The AI/ML controller entity may perform any operations to determine one or more parameters (e.g. weight parameters, adjusted objective function, etc.) to correct the imbalance for which examples are provided in this disclosure. The AI/ML controller entity may further evaluate 1202 if there is still imbalance after attempts to correct the imbalance and check the prediction performance. In case the AI/ML controller entity may determine 1203 that the prediction performance is acceptable, the AI/ML controller entity may notify 1205 the AI/ML implementing entity that the imbalance is corrected/not recognized.

FIG. 13 shows an exemplary radio access network architecture in which the radio access network is disaggregated into multiple units. In LTE or 5G NR, network access nodes, such as a BS may implement the whole network stack including physical layer (PHY), media access control (MAC), radio link control (RLC), packet data convergence control (PDCP), and radio resource control (RRC) functions of the network stack. In a distributed approach of radio access networks, the processing of the network stack is disaggregated into at least two units (e.g. into RU, DU, and CU). Although the example illustrates a distributed structure that is based on open-RAN (O-RAN) architecture, the skilled person is able to populate the teaching provided herein in other types of distributed architectures, such as baseband unit (BBU) that may operate in the cloud and may be split to a Control Unit (CU) according to Rel.15 of 3GPP standards.

In various deployments in recently emerged RAN architectures, such as Open Radio Access Network (O-RAN) architectures, network access nodes may have functionalities that are split among multiple units with an intention to meet the demands of increased capacity requirements by providing a flexible and interoperable approach for RANs. The exemplary RAN 1300 provided herein includes a radio unit (RU) 1301, a distributed unit (DU) 1302, a central unit (CU) 1303, a near-RT RAN intelligent controller (near RT-RIC) 1304, and a service management and orchestration framework (SMO) 1305 including a non-RT RIC 1306. The skilled person would recognize that the illustrated structure may represent a logical architecture, in which one or more of the entities of the mobile communication network may be implemented by the same physical entity, or a distributed physical entity (a plurality of devices operating collectively) may implement one of the entities of the mobile communication network provided herein.

There are many approaches to provide the split among the multiple units. In this illustrative example, the CU 1303 (e.g. O-CU) may be mainly responsible for non-real time operations hosting the radio resource control (RRC), the PDCP protocol, and the service data adaptation protocol (SDAP). The DU (e.g. O-DU) 1302 may be mainly responsible for real-time operations hosting, for example, RLC layer functions, MAC layer functions, and Higher-PHY functions. RUs 1301 (e.g. O-RU) may be mainly responsible for hosting the Lower-PHY functions to transmit and receive radio communication signals to/from terminal devices (e.g. UEs) and provide data streams to the DU over a fronthaul interface (e.g. open fronthaul). The SMO 1305 may provide functions to manage domains such as RAN management, Core management, Transport management, and the non-RT RIC 1306 may provide functions to support intelligent RAN optimization via policy-based guidance, AI/ML model management, etc. The near-RT RIC 1304 may provide functions for real time optimizations, including hosting one or more xApps that may collect real-time information (per UE or per Cell) and provide services, that may include AI/ML services as well.

The exemplary RAN 1300 is illustrated for the purpose of brevity. The skilled person would recognize the aspects provided herein and may also realize that the exemplary RAN 1300 may include further characterizations, such as the CU may also be -at least logically- distributed into two entities (e.g. CU-Control Plane, CU-User Plane), there may be various types of interfaces between different entities of the exemplary RAN 1300 (e.g. E2, F1, O1, X2, NG-u, etc.).

In accordance with the exemplary distributed RAN architecture, a UE may transmit radio communication signals to the RU 1301 and receive radio communication signals from the RU 1301. The processing associated with the communication is performed at the respective layers of the network stack by respective entities that are responsible to perform the corresponding function of the respective layers.

In accordance with various aspects of this disclosure and this exemplary RAN 1300, aspects associated with the management of radio resources may include MAC layer functions within the DU 1302. Accordingly, the DU 1302 or the CU 1303 may include aspects of a controller entity provided herein.

In accordance with various aspects of this disclosure and this exemplary RAN 1300, any entity with this exemplary RAN may implement aspects associated with the a device (e.g. device 500) including a processor configured to implement an AI/ML, detect an imbalance associated with the AI/ML, and control the implemented AI/ML, in particular at the DU 1302, the CU 1303, the near-RT RIC 1304, the non-RT RIC 1306.

In accordance with various aspects of this disclosure and this exemplary RAN 1300, an AI/ML implementing entity (e.g. the AI/ML implementing device 1100) may be, or may include, the near RT-RIC 1304 and the corresponding AI/ML controlling entity (e.g. the controller implementing device 1150) may be, or may include, the non-RT RIC 1306, or another entity within the mobile communication network, which may be the DU 1302 or the CU 1303. The AI/ML controlling entity may be receive the operator information from the SMO 1305. The DU 1302, or the CU 1303 may provide the cell state information or the cell data.

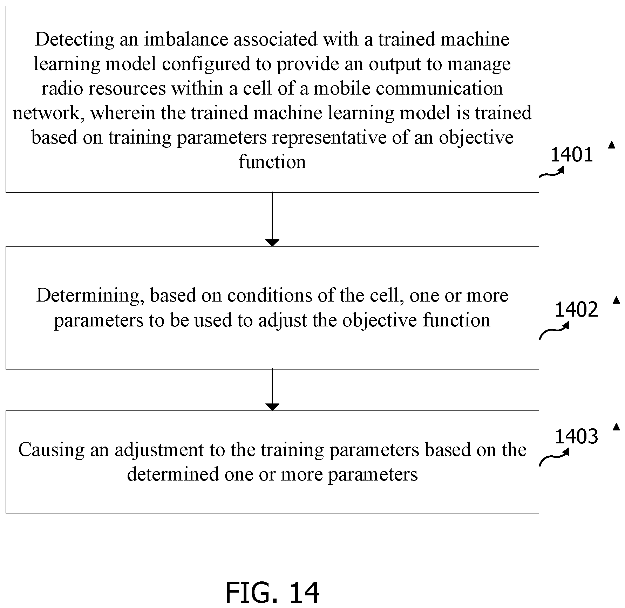

FIG. 14 shows an example of a method. The method that may include: detecting 1401 an imbalance associated with a trained machine learning model configured to provide an output to manage radio resources within a cell of a mobile communication network, wherein the trained machine learning model is trained based on training parameters representative of an objective function; determining 1402, based on conditions of the cell, one or more parameters to be used to adjust the objective function; causing 1403 an adjustment to the training parameters based on the determined one or more parameters

The following examples pertain to further aspects of this disclosure.

In example 1, the subject matter includes a device that may include: a processor configured to: detect an imbalance associated with a trained machine learning model configured to provide an output to manage radio resources within a cell of a mobile communication network, wherein the trained machine learning model is trained based on training parameters representative of an objective function; determine, based on conditions of the cell, one or more parameters to be used to adjust the objective function; cause an adjustment to the training parameters based on the determined one or more parameters.

In example 2, the subject matter of example 1, can optionally include that the processor is further configured to compare the output of the radio resource management model and the conditions of the cell In example 3, the subject matter of example 2, can optionally include that the processor is further configured to detect the imbalance based on a comparison between a plurality of outputs of the trained machine learning model, each output for an instance of time, and the conditions of the cell for a plurality of time instances, each time instance is associated with the instance of time. In example 4, the subject matter of any one of examples 1 to 3, can optionally include that the conditions of the cell include at least one of cell load conditions representative of load of the cell, quality of service (QoS) conditions representative of radio communication performance within the cell, system resource conditions representative of usage of system resources for radio resource management within the cell. In example 5, the subject matter of any one of examples 1 to 4, can optionally include that the trained machine learning model is trained with a training data set may include a plurality of training input data; can optionally include that each training input data is associated with a cell condition classification of a plurality of cell condition classifications, each cell condition classification representative of a predetermined classification for cell conditions.

In example 6, the subject matter of any one of examples 1 to 5, can optionally include that the processor is further configured to encode the determined one or more parameters as a hyperparameter of the trained machine learning model can optionally include that the trained machine learning model is configured to adjust the objective function based on a received hyperparameter. In example 7, the subject matter of example any one of examples 1 to 6, can optionally include that the objective function includes an asymmetric loss function may include a first weight parameter for underpredictions and a second weight parameter for overpredictions; can optionally include that the determined one or more parameters include at least one of the first weight parameter and/or the second weight parameter. In example 8, the subject matter of example 7, can optionally include that the processor is configured to determine at least one of the first weight parameter or the second weight parameter based on received operator information representative of an operator preference between power conservation or data throughput. In example 9, the subject matter of example 8, can optionally include that the received operator information is provided by an entity of the mobile communication network that is configured to orchestrate policies associated with management of the mobile communication network.

In example 10, the subject matter of any one of examples 7 to 9, can optionally include that the processor is further configured to determine the at least one of the first weight parameter and/or the second weight parameter using a Bayesian optimization. In example 11, the subject matter of any one of examples 7 to 10, can optionally include that the processor is further configured to detect the imbalance based on cell condition classifications associated with the training data set and the conditions of the cell. In example 12, the subject matter of example 11, can optionally include that the cell conditions associated with the respective training input data includes at least one of a cell load condition, a QoS condition, or a system resource condition; can optionally include that each cell condition classification includes a classification based on an amount associated with the respective cell condition. In example 13, the subject matter of example 12, can optionally include that the processor is further configured to detect the imbalance based on a number of training input data used to train the trained machine learning model, of which the respective cell condition classification matches the conditions of the cell. In example 14, the subject matter of example 13, can optionally include that the processor is further configured to select one of the cell condition classifications for the conditions of the cell; can optionally include that the processor is further configured to detect the imbalance based on the number of training input data associated with the selected cell condition classification for the conditions of the cell used to train the trained machine learning model. In example 15, the subject matter of example 14, can optionally include that the objective function includes at least one of a first balancing weight parameter for a first set of the training input data associated with a first cell condition classification of the plurality of cell condition classifications and a second balancing weight parameter for a second set of the training input data associated with a second cell condition classification of the plurality of cell condition classifications; can optionally include that the determined one or more parameters include at least one of the first balancing weight parameter of the second balancing weight parameter.

In example 16, the subject matter of example 15, can optionally include that the processor is further configured to determine at least one of the first balancing weight parameter or the second balancing weight parameter based on the conditions of the cell. In example 17, the subject matter of example 16, can optionally include that the processor is further configured to determine at least one of the first balancing weight parameter or the second balancing weight parameter based on further the number of training input data that matches the conditions of the cell. In example 18, the subject matter of any one of examples 14 to 17, can optionally include that the processor is further configured to implement the trained machine learning model; can optionally include that the processor is further configured to further train the trained machine learning model using the training data set with an adjusted objective function that is adjusted based on at least one of an obtained weight parameter or an obtained balancing weight parameter. In example 19, the subject matter of any one of examples 14 to 18, can optionally include that the processor is further configured to implement the trained machine learning model; can optionally include that the processor is further configured to re-train the trained machine learning model using the training data set with an adjusted objective function that is adjusted based on at least one of an obtained weight parameter or an obtained balancing weight parameter. In example 20, the subject matter of any one of examples 14 to 19, can optionally include that the processor is further configured to adjust the training parameters based on based on the at least one of an obtained weight parameter or an obtained balancing weight parameters; can optionally include that the processor is further configured to adjust model parameters of the trained machine learning model based on adjusted training parameters representative of the adjusted objective function.

In example 21, the subject matter of any one of examples 14 to 20, can optionally include that a further device that is external to the device is further configured to implement the trained machine learning model; can optionally include that the processor is further configured to encode information representative of the determined one or more parameters for a transmission to the further device; can optionally include that the encoded information is configured to cause the adjustment to the training parameters based on the determined one or more parameters. In example 22, the subject matter of any one of examples 21, can optionally include that the encoded information further includes information representative of at least one of the conditions of the cell or the selected cell condition classification for the conditions of the cell. In example 23, the subject matter of example 21 or example 22, can optionally include that the processor is further configured to decode model output data received from the further entity, can optionally include that the decoded model output data is representative of the output to manage the radio resources within the cell of the mobile communication network.

In example 24, the subject matter of any one of examples 21 to 23, can optionally include that the processor is further configured to decode training data received from the further entity, can optionally include that the decoded training data is representative of information associated with the training data set. In example 25, the subject matter of any one of examples 21 to 24, can optionally include that the processor is further configured to decode training data received from another entity of the mobile communication network, can optionally include that the another entity is configured to act as a training data repository configured to provide the training data set to the further entity. In example 26, the subject matter of any one of examples 21 to 25, can optionally include that the mobile communication network includes an open radio access network (O-RAN); can optionally include that the further device includes a controller entity of the O-RAN, can optionally include that the controller entity includes at least one of a control unit (CU), a distributed unit (DU), or a radio access network intelligent controller (RIC). In example 27, the subject matter of example 26, can optionally include that the RIC is a near real time RIC or a non-real time RIC.

In example 28, the subject matter includes a method that may include: detecting an imbalance associated with a trained machine learning model configured to provide an output to manage radio resources within a cell of a mobile communication network, wherein the trained machine learning model is trained based on training parameters representative of an objective function; determining, based on conditions of the cell, one or more parameters to be used to adjust the objective function; causing an adjustment to the training parameters based on the determined one or more parameters.

In example 29, the subject matter of example 28, may further include: comparing the output of the radio resource management model and the conditions of the cell In example 30, the subject matter of example 29, may further include: detecting the imbalance based on a comparison between a plurality of outputs of the trained machine learning model, each output for an instance of time, and the conditions of the cell for a plurality of time instances, each time instance is associated with the instance of time. In example 31, the subject matter of any one of examples 28 to 30, can optionally include that the conditions of the cell include at least one of cell load conditions representative of load of the cell, quality of service (QoS) conditions representative of radio communication performance within the cell, system resource conditions representative of usage of system resources for radio resource management within the cell. In example 32, the subject matter of any one of examples 28 to 31, can optionally include that the trained machine learning model is trained with a training data set may include a plurality of training input data; can optionally include that each training input data is associated with a cell condition classification of a plurality of cell condition classifications, each cell condition classification representative of a predetermined classification for cell conditions.

In example 33, the subject matter of any one of examples 28 to 32, may further include: encoding the determined one or more parameters as a hyperparameter of the trained machine learning model; can optionally include that the trained machine learning model is configured to adjust the objective function based on a received hyperparameter. In example 34, the subject matter of example any one of examples 28 to 33, can optionally include that the objective function includes an asymmetric loss function may include a first weight parameter for underpredictions and a second weight parameter for overpredictions; can optionally include that the determined one or more parameters include at least one of the first weight parameter and/or the second weight parameter. In example 35, the subject matter of example 34, may further include: determining at least one of the first weight parameter or the second weight parameter based on received operator information representative of an operator preference between power conservation or data throughput. In example 36, the subject matter of example 35, can optionally include that the received operator information is provided by an entity of the mobile communication network that is configured to orchestrate policies associated with management of the mobile communication network.

In example 37, the subject matter of any one of examples 34 to 36, may further include: determining the at least one of the first weight parameter and/or the second weight parameter using a Bayesian optimization. In example 38, the subject matter of any one of examples 34 to 37, may further include: detecting the imbalance based on cell condition classifications associated with the training data set and the conditions of the cell. In example 39, the subject matter of example 38, can optionally include that the cell conditions associated with the respective training input data includes at least one of a cell load condition, a QoS condition, or a system resource condition; can optionally include that each cell condition classification includes a classification based on an amount associated with the respective cell condition. In example 40, the subject matter of example 39, may further include: detecting the imbalance based on a number of training input data used to train the trained machine learning model, of which the respective cell condition classification matches the conditions of the cell. In example 41, the subject matter of example 40, may further include: selecting one of the cell condition classifications for the conditions of the cell; can optionally include that the processor is further configured to detect the imbalance based on the number of training input data associated with the selected cell condition classification for the conditions of the cell used to train the trained machine learning model.

In example 42, the subject matter of example 41, can optionally include that the objective function includes at least one of a first balancing weight parameter for a first set of the training input data associated with a first cell condition classification of the plurality of cell condition classifications and a second balancing weight parameter for a second set of the training input data associated with a second cell condition classification of the plurality of cell condition classifications; can optionally include that the determined one or more parameters include at least one of the first balancing weight parameter of the second balancing weight parameter. In example 43, the subject matter of example 42, may further include: determining at least one of the first balancing weight parameter or the second balancing weight parameter based on the conditions of the cell. In example 44, the subject matter of example 43, may further include: determining at least one of the first balancing weight parameter or the second balancing weight parameter based on further the number of training input data that matches the conditions of the cell. In example 45, the subject matter of any one of examples 42 to 44, may further include: implementing the trained machine learning model; further training the trained machine learning model using the training data set with an adjusted objective function that is adjusted based on at least one of an obtained weight parameter or an obtained balancing weight parameter. In example 46, the subject matter of any one of examples 42 to 44, may further include: implementing the trained machine learning model; can optionally include that the processor is further configured to re-train the trained machine learning model using the training data set with an adjusted objective function that is adjusted based on at least one of an obtained weight parameter or an obtained balancing weight parameter.

In example 47, the subject matter of any one of examples 45 to 46, may further include: adjusting the training parameters based on based on the at least one of an obtained weight parameter or an obtained balancing weight parameters; adjusting model parameters of the trained machine learning model based on adjusted training parameters representative of the adjusted objective function. In example 48, the subject matter of any one of examples 41 to 44, may further include: encoding information representative of the determined one or more parameters for a transmission to a further device; can optionally include that the encoded information is configured to cause the adjustment to the training parameters based on the determined one or more parameters; can optionally include that the further device is an external device configured to implement the trained machine learning model.. In example 49, the subject matter of any one of examples 48, can optionally include that the encoded information further includes information representative of at least one of the conditions of the cell or the selected cell condition classification for the conditions of the cell. In example 50, the subject matter of example 48 or example 49, may further include: decoding model output data received from the further entity, can optionally include that the decoded model output data is representative of the output to manage the radio resources within the cell of the mobile communication network.

In example 51, the subject matter of any one of examples 48 to 50, may further include: decoding training data received from the further entity, can optionally include that the decoded training data is representative of information associated with the training data set. In example 52, the subject matter of any one of examples 48 to 50, may further include: decoding training data received from another entity of the mobile communication network, can optionally include that the another entity is configured to act as a training data repository configured to provide the training data set to the further entity. In example 53, the subject matter of any one of examples 48 to 52, can optionally include that the mobile communication network includes an open radio access network (O-RAN); can optionally include that the further device includes a controller entity of the O-RAN, can optionally include that the controller entity includes at least one of a control unit (CU), a distributed unit (DU), or a radio access network intelligent controller (RIC). In example 54, the subject matter of example 53, can optionally include that the RIC is a near real time RIC or a non-real time RIC.

In example 55, a non-transitory computer-readable medium may include one or more instructions which, if executed by a processor, cause the processor to: detect an imbalance associated with a trained machine learning model configured to provide an output to manage radio resources within a cell of a mobile communication network, can optionally include that the trained machine learning model is trained based on training parameters representative of an objective function; determine, based on conditions of the cell, one or more parameters to be used to adjust the objective function; cause an adjustment to the training parameters based on the determined one or more parameters.

In example 56, a non-transitory computer-readable medium may include one or more instructions which, if executed by a processor, cause the processor to perform a method according to any one of the methods of examples 28 to 54.

In example 57, a device may include: a processor configured to: determine whether there is an imbalance associated with a trained machine learning model configured to provide an output to manage radio resources within a cell of a mobile communication network, can optionally include that the trained machine learning model is trained by adjusting model parameters based on a mapping operation configured to calculate prediction errors; determine, based on conditions of the cell and the detection of the imbalance, one or more parameters to be used to adjust the calculation of the prediction errors; cause an adjustment to the mapping operation based on the determined one or more parameters. In example 58, the device of example 57, can optionally include that the device is further configured to operate according to any one of examples provided in this disclosure, in particular in accordance with examples 1 to 27.

The word "exemplary" is used herein to mean "serving as an example, instance, or illustration". Any aspect or design described herein as "exemplary" is not necessarily to be construed as preferred or advantageous over other aspects or designs.

Throughout the drawings, it should be noted that like reference numbers are used to depict the same or similar elements, features, and structures, unless otherwise noted. It should be noted that certain components may be omitted for the sake of simplicity. It should be noted that nodes (dots) are provided to identify the circuit line intersections in the drawings including electronic circuit diagrams.

The phrase "at least one" and "one or more" may be understood to include a numerical quantity greater than or equal to one (e.g., one, two, three, four, [...], etc.). The phrase "at least one of" with regard to a group of elements may be used herein to mean at least one element from the group consisting of the elements. For example, the phrase "at least one of" with regard to a group of elements may be used herein to mean a selection of: one of the listed elements, a plurality of one of the listed elements, a plurality of individual listed elements, or a plurality of a multiple of individual listed elements.

The words "plural" and "multiple" in the description and in the claims expressly refer to a quantity greater than one. Accordingly, any phrases explicitly invoking the aforementioned words (e.g., "plural [elements]", "multiple [elements]") referring to a quantity of elements expressly refers to more than one of the said elements. For instance, the phrase "a plurality" may be understood to include a numerical quantity greater than or equal to two (e.g., two, three, four, five, [...], etc.).

As used herein, a signal that is "indicative of" or "indicating" a value or other information may be a digital or analog signal that encodes or otherwise, communicates the value or other information in a manner that can be decoded by and/or cause a responsive action in a component receiving the signal. The signal may be stored or buffered in computer-readable storage medium prior to its receipt by the receiving component and the receiving component may retrieve the signal from the storage medium. Further, a "value" that is "indicative of" some quantity, state, or parameter may be physically embodied as a digital signal, an analog signal, or stored bits that encode or otherwise communicate the value.

As used herein, a signal may be transmitted or conducted through a signal chain in which the signal is processed to change characteristics such as phase, amplitude, frequency, and so on. The signal may be referred to as the same signal even as such characteristics are adapted. In general, so long as a signal continues to encode the same information, the signal may be considered as the same signal. For example, a transmit signal may be considered as referring to the transmit signal in baseband, intermediate, and radio frequencies.

The terms "processor" or "controller" as, for example, used herein may be understood as any kind of technological entity that allows handling of data. The data may be handled according to one or more specific functions executed by the processor or 9. Further, a processor or controller as used herein may be understood as any kind of circuit, e.g., any kind of analog or digital circuit. A processor or a controller may thus be or include an analog circuit, digital circuit, mixed-signal circuit, logic circuit, processor, microprocessor, Central Processing Unit (CPU), Graphics Processing Unit (GPU), Digital Signal Processor (DSP), Field Programmable Gate Array (FPGA), integrated circuit, Application Specific Integrated Circuit (ASIC), etc., or any combination thereof. Any other kind of implementation of the respective functions, which will be described below in further detail, may also be understood as a processor, controller, or logic circuit. It is understood that any two (or more) of the processors, controllers, or logic circuits detailed herein may be realized as a single entity with equivalent functionality or the like, and conversely that any single processor, controller, or logic circuit detailed herein may be realized as two (or more) separate entities with equivalent functionality or the like.

The terms "one or more processors" is intended to refer to a processor or a controller. The one or more processors may include one processor or a plurality of processors. The terms are simply used as an alternative to the "processor" or "controller".

The term "user device" is intended to refer to a device of a user (e.g. occupant) that may be configured to provide information related to the user. The user device may exemplarily include a mobile phone, a smart phone, a wearable device (e.g. smart watch, smart wristband), a computer, etc.

As utilized herein, terms "module", "component," "system," "circuit," "element," "slice," " circuit," and the like are intended to refer to a set of one or more electronic components, a computer-related entity, hardware, software (e.g., in execution), and/or firmware. For example, circuit or a similar term can be a processor, a process running on a processor, a controller, an object, an executable program, a storage device, and/or a computer with a processing device. By way of illustration, an application running on a server and the server can also be circuit. One or more circuits can reside within the same circuit, and circuit can be localized on one computer and/or distributed between two or more computers. A set of elements or a set of other circuits can be described herein, in which the term "set" can be interpreted as "one or more."

As used herein, "memory" is understood as a computer-readable medium (e.g., a non-transitory computer-readable medium) in which data or information can be stored for retrieval. References to "memory" included herein may thus be understood as referring to volatile or non-volatile memory, including random access memory (RAM), read-only memory (ROM), flash memory, solid-state storage, magnetic tape, hard disk drive, optical drive, 3D Points, among others, or any combination thereof. Registers, shift registers, processor registers, data buffers, among others, are also embraced herein by the term memory. The term "software" refers to any type of executable instruction, including firmware.

The term "data" as used herein may be understood to include information in any suitable analog or digital form, e.g., provided as a file, a portion of a file, a set of files, a signal or stream, a portion of a signal or stream, a set of signals or streams, and the like. Further, the term "data" may also be used to mean a reference to information, e.g., in form of a pointer. The term "data", however, is not limited to the aforementioned examples and may take various forms and represent any information as understood in the art. The term "data item" may include data or a portion of data.

It will be understood that when an element is referred to as being "connected" or "coupled" to another element, it can be physically connected or coupled to the other element such that current and/or electromagnetic radiation (e.g., a signal) can flow along a conductive path formed by the elements. Intervening conductive, inductive, or capacitive elements may be present between the element and the other element when the elements are described as being coupled or connected to one another. Further, when coupled or connected to one another, one element may be capable of inducing a voltage or current flow or propagation of an electro-magnetic wave in the other element without physical contact or intervening components. Further, when a voltage, current, or signal is referred to as being "provided" to an element, the voltage, current, or signal may be conducted to the element by way of a physical connection or by way of capacitive, electro-magnetic, or inductive coupling that does not involve a physical connection.

Unless explicitly specified, the term "instance of time" refers to a time of a particular event or situation according to the context. The instance of time may refer to an instantaneous point in time, or to a period of time which the particular event or situation relates to.

While the above descriptions and connected figures may depict electronic device components as separate elements, skilled persons will appreciate the various possibilities to combine or integrate discrete elements into a single element. Such may include combining two or more circuits to form a single circuit, mounting two or more circuits onto a common chip or chassis to form an integrated element, executing discrete software components on a common processor core, etc. Conversely, skilled persons will recognize the possibility to separate a single element into two or more discrete elements, such as splitting a single circuit into two or more separate circuits, separating a chip or chassis into discrete elements originally provided thereon, separating a software component into two or more sections and executing each on a separate processor core, etc.

It is appreciated that implementations of methods detailed herein are demonstrative in nature, and are thus understood as capable of being implemented in a corresponding device. Likewise, it is appreciated that implementations of devices detailed herein are understood as capable of being implemented as a corresponding method. It is thus understood that a device corresponding to a method detailed herein may include one or more components configured to perform each aspect of the related method. All acronyms defined in the above description additionally hold in all claims included herein.

**Claims**

1. A device comprising:
   a processor configured to:

   detect an imbalance associated with a trained machine learning model configured to provide an output to manage radio resources within a cell of a mobile communication network, wherein the trained machine learning model is trained based on training parameters representative of an objective function;
   determine, based on conditions of the cell, one or more parameters to be used to adjust the objective function;
   cause an adjustment to the training parameters based on the determined one or more parameters.

2. The device of claim 1,
   wherein the processor is further configured to detect the imbalance based on operator information representative of a prioritization between a quality of service (QoS) within the cell and a conservation of system resources within cell .

3. The device of claim 1 or claim 2,
   wherein the conditions of the cell comprise at least one of cell load conditions representative of load of the cell, quality of service (QoS) conditions representative of radio communication performance within the cell, system resource conditions representative of usage of system resources for radio resource management within the cell.

4. The device of any one of claims 1 to 3,

   wherein the trained machine learning model is trained with a training data set comprising a plurality of training input data;
   wherein each training input data is associated with a cell condition classification of a plurality of cell condition classifications, each cell condition classification representative of a predetermined classification for cell conditions.

5. The device of claim any one of claims 1 to 4,

   wherein the objective function comprises an asymmetric loss function comprising one or more weight parameters configured to weigh underpredictions and overpredictions differently;
   wherein the determined one or more parameters comprise the one or more weight parameters.

6. The device of any one of claims 1 to 5,

   wherein the processor is further configured to detect the imbalance based on cell condition classifications associated with the training data set and the conditions of the cell;
   wherein the processor is further configured to detect the imbalance based on a number of training input data used to train the trained machine learning model, of which the respective cell condition classification matches the conditions of the cell.

7. The device of any one of claims 1 to 6,
   wherein the processor is further configured to detect the imbalance based on prediction errors associated with one or more outputs of the trained machine learning model.

8. The device of any one of claims 1 to 7,

   wherein the objective function comprises one or more balancing weight parameters to weigh calculations associated with a first set of the training input data associated with a first cell condition classification of a plurality of cell condition classifications a second set of the training input data associated with a second cell condition classification of the plurality of cell condition classifications differently;
   wherein the determined one or more parameters comprise the one or more balancing weight parameters.

9. The device of any one of claims 1 to 8,

   wherein the processor is further configured to implement the trained machine learning model;
   wherein the processor is further configured to further train the trained machine learning model using the training data set with an adjusted objective function that is adjusted based on at least one of an obtained weight parameter or an obtained balancing weight parameter.

10. The device of any one of claims 1 to 8,

wherein the processor is further configured to implement the trained machine learning model;
wherein the processor is further configured to re-train the trained machine learning model using the training data set with an adjusted objective function that is adjusted based on at least one of an obtained weight parameter or an obtained balancing weight parameter.

11. The device of any one of claims 1 to 8,

wherein the processor is further configured to adjust the training parameters based on based on the at least one of an obtained weight parameter or an obtained balancing weight parameters;
wherein the processor is further configured to adjust model parameters of the trained machine learning model based on adjusted training parameters representative of the adjusted objective function.

12. The device of any one of claims 1 to 11,

wherein a further device that is external to the device is further configured to implement the trained machine learning model;
wherein the processor is further configured to encode information representative of the determined one or more parameters for a transmission to the further device;
wherein the encoded information is configured to cause the adjustment to the training parameters based on the determined one or more parameters.

13. The device of claim 12,

wherein the mobile communication network comprises an open radio access network (O-RAN);
wherein the further device comprises a controller entity of the O-RAN, wherein the controller entity comprises at least one of a control unit (CU), a distributed unit (DU), or a radio access network intelligent controller (RIC).

14. A non-transitory computer-readable medium comprising one or more instructions which, if executed by a processor, cause the processor to:

detect an imbalance associated with a trained machine learning model configured to provide an output to manage radio resources within a cell of a mobile communication network, wherein the trained machine learning model is trained based on training parameters representative of an objective function;
determine, based on conditions of the cell, one or more parameters to be used to adjust the objective function;
cause an adjustment to the training parameters based on the determined one or more parameters.

15. The non-transitory computer-readable medium of claim 14,
wherein the conditions of the cell comprise at least one of cell load conditions representative of load of the cell, quality of service (QoS) conditions representative of radio communication performance within the cell, system resource conditions representative of usage of system resources for radio resource management within the cell.

FIG. 1

FIG. 2

FIG. 3

FIG. 4

FIG. 5

FIG. 6

701

Obtain Preference Information

700

702

Obtain Prediction Weights

703

Determine New Prediction Weights

704

Cause Adjustment to Training Parameters

# FIG. 7

801

Obtain Training Data

800

802

Match Cell Conditions?

NO

YES

803

Use Objective Function #1

804

Use Objective Function #2

805

Adjust Model Parameters based on the Used Objective Function

# FIG. 8

FIG. 9

FIG. 10

FIG. 11

AI/ML Implementing Entity Sends Request to AI/ML Controller Entity — 1201

1200

AI/ML Controller Entity Evaluates the Imbalance and Checks the Prediction Performance — 1202

AI/ML Controller Entity Attempts to Correct the Imbalance — 1204

Prediction Performance Acceptable? — 1203

NO

YES

AI/ML Controller Entity Notifies AI/ML Implementing Entity — 1205

## FIG. 12

CU 1303

DU 1302

RU 1301

SMO 1305

Near-RT RIC 1304

Non-RT RIC 1306

1300

## FIG. 13

Detecting an imbalance associated with a trained machine learning model configured to provide an output to manage radio resources within a cell of a mobile communication network, wherein the trained machine learning model is trained based on training parameters representative of an objective function

1401 ▲

Determining, based on conditions of the cell, one or more parameters to be used to adjust the objective function

1402 ▲

1403 ▲

Causing an adjustment to the training parameters based on the determined one or more parameters

FIG. 14

Europäisches
Patentamt

European
Patent Office

Office européen
des brevets

# EUROPEAN SEARCH REPORT

**Application Number**

EP 22 19 8027

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2021/160149 A1 (MA JIANGLEI [CA] ET AL) 27 May 2021 (2021-05-27) | 1,3-15 | INV. H04W24/02 H04W72/04 |
| A | * paragraphs [0051] - [0070], [0133] - [0156] * | 2 | |
| A | WO 2022/171536 A1 (NOKIA TECHNOLOGIES OY [FI]) 18 August 2022 (2022-08-18) * page 11, line 16 - page 15, line 27 * | 1-15 | |
| A | EP 3 869 847 A1 (INTEL CORP [US]) 25 August 2021 (2021-08-25) * paragraphs [0090] - [0109] * | 1-15 | |

TECHNICAL FIELDS
SEARCHED (IPC)

H04W

The present search report has been drawn up for all claims

| Place of search | Date of completion of the search | Examiner |
|---|---|---|
| Munich | 3 March 2023 | Wolf, William |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
.......................................................................
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 22 19 8027

This annex lists the patent family members relating to the patent documents cited in the above-mentioned European search report.
The members are as contained in the European Patent Office EDP file on
The European Patent Office is in no way liable for these particulars which are merely given for the purpose of information.

03-03-2023

| Patent document cited in search report | | Publication date | Patent family member(s) | | Publication date |
|---|---|---|---|---|---|
| US 2021160149 | A1 | 27-05-2021 | BR 112022009858 | A2 | 02-08-2022 |
| | | | CN 114788319 | A | 22-07-2022 |
| | | | EP 4052496 | A1 | 07-09-2022 |
| | | | JP 2023503111 | A | 26-01-2023 |
| | | | US 2021160149 | A1 | 27-05-2021 |
| | | | US 2022353155 | A1 | 03-11-2022 |
| | | | WO 2021098159 | A1 | 27-05-2021 |
| WO 2022171536 | A1 | 18-08-2022 | FI 20215150 | A1 | 16-08-2022 |
| | | | WO 2022171536 | A1 | 18-08-2022 |
| EP 3869847 | A1 | 25-08-2021 | NONE | | |

EPO FORM P0459

For more details about this annex : see Official Journal of the European Patent Office, No. 12/82